(19) Europäisches Patentamt
European Patent Office
Office européen des brevets

(11) **EP 2 933 271 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
*C08F 2/10* (2006.01)     *C08F 20/56* (2006.01)
*C08F 4/40* (2006.01)     *C08F 2/50* (2006.01)
*C08F 4/04* (2006.01)

(21) Anmeldenummer: **14164736.2**

(22) Anmeldetag: **15.04.2014**

(54) **VERFAHREN ZUR HERSTELLUNG VON WASSERLÖSLICHEN HOMO- ODER COPOLYMEREN UMFASSEND (METH)ACRYLAMID**

METHOD FOR THE PREPARATION OF (METH) ACRYLAMIDE COMPRISING WATER-SOLUBLE HOMO- OR COPOLYMERS

PROCÉDÉ DE FABRICATION DE HOMO- OU COPOLYMÈRES SOLUBLES DANS L'EAU COMPRENANT DU (MÉTH)ACRYLAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2015 Patentblatt 2015/43**

(73) Patentinhaber: **BASF SE**
**67056 Ludwigshafen (DE)**

(72) Erfinder: **Langlotz, Björn**
**83308 Trostberg (DE)**

(56) Entgegenhaltungen:
**WO-A1-2012/069478     WO-A1-2012/136613**
**DE-A1- 19 748 153**

**Beschreibung**

Die Erfindung betrifft Verfahren zur Herstellung von wasserlöslichen Homo- oder Copolymeren umfassend (Meth)acrylamid durch radikalische Polymerisation einer wässrigen Lösung ethylenisch ungesättigter Monomere umfassend mindestens (Meth)acrylamid in Gegenwart mindestens eines Stabilisators zur Verhinderung von Polymerabbau durch molekularen Sauerstoff, ausgewählt aus der Gruppe von schwefelhaltigen Verbindungen, sterisch gehinderten Aminen, N-Oxiden, Nitrosoverbindungen, aromatische Hydroxyverbindungen oder Ketonen. Bevorzugt handelt es sich bei dem Stabilisator um 2-Mercaptobenzothiazol oder ein Salz davon.

Hochmolekulares Homopolyacrylamid sowie wasserlösliche Polyacrylamidcopolymere, beispielsweise Acrylamid-Acrylsäure-Copolymere oder Copolymere aus Acrylamid und kationischen Comonomeren sind prinzipiell bekannt. Sie werden in vielen Bereichen der Technik eingesetzt, beispielsweise als Verdicker, Flockungsmittel, Verstärker für Papier, zur Ölgewinnung oder für Bergbauanwendungen. Die Herstellung kann insbesondere in wässriger Phase erfolgen, beispielsweise mittels adiabatischer Gelpolymerisation.

Eine Anwendung hochmolekularer Polyacrylamide ist deren Verwendung zur tertiären Erdölförderung, und zwar zum so genannten "Polymerfluten". Hierbei presst man durch Injektionsbohrungen wässrige Lösungen eines verdickend wirkenden Polymers in eine Erdöllagerstätte ein, wobei die Viskosität der wässrigen Polymerlösung an die Viskosität des Erdöls angepasst ist. Durch das Einpressen der Polymerlösung wird das Erdöl in der Erdöllagerstätte durch feine Hohlräume in der Lagerstätte von der Injektionsbohrung ausgehend in Richtung einer weiteren Bohrung, der sogenannten Produktionsbohrung gedrückt, und Erdöl wird über die Produktionsbohrung gefördert. Die Verwendung von viskosen wässrigen Polymerlösungen anstelle von Wasser hat den Vorteil, dass die Polymerlösung viel gleichmäßiger durch die Formation strömt als Wasser und dadurch mehr Öl mobilisiert wird als bei Verwendung von Wasser alleine.

Die Lagerstättentemperatur von Erdöllagerstätten liegt üblicherweise oberhalb Raumtemperatur, beispielsweise bei 30°C bis 120°C. Die wässrige Polymerlösung strömt nur sehr langsam durch die Formation, so dass die Verweilzeit der wässrigen Polymerlösung in der Formation üblicherweise mehrere Monate, u.U. sogar Jahre beträgt. Um die Mobilisierung von Erdöl auch über diesen Zeitraum zu gewährleisten, sollte die Viskosität der Polymerlösung nicht oder zumindest nicht Wesentlich abnehmen. Die Viskosität der Polymerlösung kann sich insbesondere verringern, wenn die Polymere chemisch oder physikalisch abgebaut werden.

Eine Ursache für den chemischen Abbau von Polymeren kann die Anwesenheit von Sauerstoff in der Polymerlösung sein. Die Polymerlösungen werden daher üblicherweise durch Auflösen von festen Polymerpulvern in geeigneten Löseanlagen auf dem Ölfeld hergestellt, wobei man versucht, Sauerstoff auszuschließen, beispielsweise durch Arbeiten unter Schutzgas.

Die zum Polymerfluten benötigten Mengen an Polymerlösung sind allerdings hoch. Selbst zum Fluten von Ölfeldern nur mittlerer Größe kann es notwendig sein, einige tausend m$^3$ Polymerlösung pro Tag zu injizieren. Bei einer Polymerkonzentration von 0,2 Gew. % und einer Injektionsrate von 5000 m$^3$ pro Tag müssen pro Tag 10 t festes Polymer gelöst werden. Unter diesen Bedingungen ist es schwierig oder zumindest aufwändig, Sauerstoff vollständig auszuschließen. Es ist daher verbreitet, den Polymerlösungen Stabilisatoren bzw. Kombinationen von Stabilisatoren zuzusetzen, welche den Abbau des Polymers durch molekularen Sauerstoff bzw. durch diesen induzierte weitere Reaktionen verhindern sollen. Bei derartigen Stabilisatoren kann es sich um Radikalfänger handeln. Radikalfänger sollen mit freien Radikalen reagieren, so dass das Radikal nicht mehr das Polymer angreifen und chemisch abbauen kann. Beispiele derartiger Stabilisatoren umfassen Schwefelverbindungen wie beispielsweise 2-Mercaptobenzothiazol oder sterisch gehinderte Amine. WO 2010/133258 A1 sowie die darin zitierte Literatur geben einen Überblick über die Verwendung verschiedener Stabilisatoren in Polymerlösungen zur Verhinderung radikalischen Abbaus durch molekularen Sauerstoff zur tertiären Erdölförderung.

Derartige Stabilisatoren können selbstverständlich beim Auflösen der festen Polymere durch den Anwender zugegeben werden. Viele Anwender ziehen es aber vor, Polymergranulate, Polymerpulver oder andere feste Polymerpräparate einzusetzen, welche bereits Stabilisatoren enthalten, weil dies den Aufwand auf der Anwenderseite verringert.

Die Herstellung von Stabilisatoren enthaltenden Polyacrylamiden und Polyacrylamidcopolymeren kann auf verschiedene Art und Weise erfolgen, beispielsweise indem man festes Polymer oder ein Polymergel mit einem ebenfalls festen Stabilisator in geeigneten Mischern vermischt. Schließlich kann man das Polymer und den Stabilisator in Wasser auflösen und eine Mischung aus Polymer und Stabilisator ausfällen. Die Herstellung kann auch erfolgen, indem man Polymergele oder Polymergranulate mit einer Lösung der Stabilisatoren besprüht. Diese Vorgehensweise hat den Nachteil, dass der Stabilisator nur oberflächlich aufgebracht ist. Beim Transport der Polymergranulate, beispielsweise in Big Bags, kann es immer zu oberflächlichem Abrieb kommen. Der Feinanteil mit einem hohen Stabilisatorgehalt sammelt sich im Transportbehälter üblicherweise unten an, während das grobe Material oben an Stabilisator verarmt ist. Entnimmt man dem Behältnis nur einen Teil des Inhalts, dann weicht die Stabilisatormenge in Lösung möglicherweise vom gewünschten Wert ab. Alle genannten Varianten haben den Nachteil, dass es sich um einen weiteren Verfahrensschritt handelt, welcher zusätzlichen Aufwand bedeutet.

JP 74027659 B beschreiben die Herstellung von Polyacrylamiden durch Polymerisation von Acrylamid in wässriger Lösung. Nach der Polymerisation wird der Stabilisator der wässrigen Lösung zugesetzt, und schließlich werden Polymer und Stabilisator gemeinsam mittels geeigneter Fällmittel aus der wässrigen Lösung ausgefällt und getrocknet.

Die Herstellung hochmolekularer Polyacrylamide kann besonders vorteilhaft mittels adiabatischer Gelpolymerisation vorgenommen werden. Hierbei wird zunächst eine Lösung von Acrylamid sowie optional wasserlöslichen Comonomeren in Wasser angesetzt. Die Konzentration der Monomere kann 20 bis 70 Gew. % betragen. Die Lösung wird ohne Rühren polymerisiert und der Reaktor wird üblicherweise weder geheizt noch gekühlt. Hierbei entsteht ein festes Polymergel, welches getrocknet und zu einem Granulat oder Pulver vermahlen wird.

WO 2012/069478 A1 offenbart ein Verfahren zur tertiären Erdölförderung, bei dem man ein wasserlösliches, hydrophob assoziierendes Copolymer mindestens umfassend (Meth)acrylamid oder Derivate davon, mindestens ein Monomer mit sauren Gruppen sowie ein Monomer mit einer terminalen hydrophoben Gruppe einsetzt. Die Herstellung kann mittels Gelpolymerisation erfolgen. Hierzu wird zunächst eine Mischung aus den Monomeren, Initiatoren sowie optional weiteren Hilfsmitteln in Wasser oder einem wässrigen Lösemittelgemisch bereitgestellt. Die Polymerisation kann fotochemisch oder thermisch gestartet werden. Die fotochemische Polymerisation kann bevorzugt bei Temperaturen - 5°C bis 10°C vorgenommen werden. Die thermische Polymerisation kann unter Verwendung einer Mischung aus einem Redoxinitiatorsystem und einem wasserlöslichen Azoinitiator bei 0 bis 10°C gestartet werden. Durch die freiwerdende Reaktionswärme erwärmt sich die Mischung und es wird ein Polymergel gebildet.

WO 2012/136613 A1 offenbart ein Verfahren zur Erdölförderung, bei dem man permeable Bereiche einer unterirdischen Erdöllagerstätte unter Verwendung einer wässrigen Formulierung eines hydrophob assoziierenden Copolymers blockiert, wobei die Polymere bevorzugt vernetzt werden. Das hydrophob assoziierende Copolymer umfasst mindenstens (Meth)acrylamid oder Derivate davon, ein Monomer mit einer terminalen hydrophoben Gruppe sowie Monomere mit sauren Gruppen und/oder (Meth)acrylsäureester einsetzt. Die Herstellung kann mittels Gelpolymerisation erfolgen, wobei WO 2012/136613 A1 zur Durchführung der Gelpolymerisation die gleichen Einzelheiten offenbart wie WO 2012/069478 A1.

DE 197 48 153 A1 offenbart ein Verfahren zur Herstellung wasserlöslicher, kationischer Polyelektrolyte durch adiabatische Fotopolymerisation, bei dem man eine Mischung aus nichtionischen Monomeren und kationischen Monomeren in wässriger Lösung in Gegenwart eines Fotoinitiators sowie eines Redoxsystems, welches erst bei Temperaturen $\geq$ 20°C die Polymerisation zu initiieren vermag , vornimmt. Die Fotopolymerisation wird bei Temperaturen von weniger als 20°C, bevorzugt weniger als 10°C gestartet, und durch das Aufwärmen der Mischung aufgrund Reaktionswärme, initiiert im weiteren Verlauf der Herstellung auch das Redoxsystem die Polymerisation.

Keines der Dokumente WO 2012/069478 A1, WO 2012/136613 A1 sowie DE 197 48 153 A1 offenbart aber, dass man Stabilisatoren zur Verhinderung des Polymerabbaus durch molekularen Sauerstoff bereits der zu polymerisierenden Mischung zugeben kann.

Selbstverständlich kann man das erhaltene, feste Polymergel oder das getrocknete Polymer mit einem Stabilisator in einer geeigneten Mischvorrichtung vermischen, aber dies wäre wiederum ein Verfahrensschritt mehr.

Es sind auch Techniken bekannt, bei denen man den Stabilisator bei einer Gelpolymerisation bereits vor der Polymerisation zugibt.

US 5,296,577 beschreibt ein Verfahren zur Herstellung von Polyacrylamiden durch radikalische Polymerisation von Acrylamid sowie optional Comonomeren in wässrigem Medium in

Gegenwart von Azoinitiatoren sowie mindestens 0,1 Gew. % des Stabilisators 2-Mercaptobenzthiazol oder einem Salz davon bei einem pH-Wert von mindestens 6, bevorzugt mindestens 7 in einem Temperaturbereich von 5 bis 100°C unter adiabatischen Bedingungen. Obwohl 2-Mercaptobenzthiazol mit Radikalen reagieren kann, reagiert es nicht irreversibel und unerwünscht mit den Azoinitiatoren. Um hochmolekulare Polymere mit hoher Viskosität zu erhalten, ist es wünschenswert, die Polymerisation bei möglichst niedriger Temperatur zu starten. US 5,296,577 lehrt jedoch, dass bei dem von US 5,296,577 vorgeschlagenen Verfahren bei einer Polymerisationstemperatur von weniger als 5°C die Polymerisation so stark verzögert wird, dass keine hochmolekularen Polyacrylamide mehr erhalten werden.

DE 30 21 767 A1 beschreibt ein Verfahren zur Herstellung hochmolekularer Polyacrylamide durch radikalische Polymerisation in wässrigem Medium, bei dem man die Polymerisation in Gegenwart von 2-Mercaptobenzimidazol durchführt. Die Polymerisation kann im Temperaturbereich von 0°C bis 100°C durchgeführt werden. Die Beispiele zeigen aber nur den Start der Polymerisation bei 10°C bis 30°C sowie pH-Werten $\geq$ 7.

Aufgabe der Erfindung war es, ein Verfahren zur Herstellung von Polyacrylamiden mittels Gelpolymerisation in Gegenwart eines Stabilisators zur Verhinderung von oxidativem Abbau durch molekularen Sauerstoff bereitzustellen, bei dem die Polymerisation auch bei Temperaturen unterhalb 5°C initiiert werden kann.

Dementsprechend wurde ein Verfahren zur Herstellung von wasserlöslichen Homo- oder Copolymeren umfassend (Meth)acrylamid durch radikalische Polymerisation gefunden, wobei man eine wässrige Lösung ethylenisch ungesättigter Monomere umfassend mindestens (Meth)acrylamid in Gegenwart mindestens eines Stabilisators zur Verhinderung von Polymerabbau durch molekularen Sauerstoff radikalisch polymerisiert, und wobei es sich bei dem Verfahren um eine Gelpolymerisation handelt, und das Verfahren mindestens die folgenden Schritte umfasst:

(I) Bereitstellen einer wässrigen Monomerlösung umfassend mindestens

- Wasser,

- 25 bis 45 Gew. % -bezogen auf die Menge aller Komponenten der wässrigen Lösung- ethylenisch ungesättigter Monomere (A), wobei es sich bei mindestens 70 Gew. % der Monomere um monoethylenisch ungesättigte, hydrophile Monomere (A1) mit einer Löslichkeit in Wasser beim Raumtemperatur von mindestens 50 g/l handelt, mit der Maßgabe, dass es sich bei mindestens einem der Monomere (A1) um (Meth)acrylamid handelt,

- 0,1 bis 2 Gew. % -bezogen auf die Summe aller Monomere- mindestens eines Stablisators (B) zur Verhinderung von Polymerabbau durch molekularen Sauerstoff, ausgewählt aus der Gruppe von schwefelhaltigen Verbindungen, sterisch gehinderten Aminen, N-Oxiden, Nitrosoverbindungen, aromatische Hydroxyverbindungen oder Ketonen,

- einen Azoinitiator (C) mit einer 10 h $t_{1/2}$ von 40°C bis 75°C,

wobei die wässrige Monomerlösung

- einen pH-Wert < 7 aufweist,

- auf eine Temperatur < 5°C gekühlt und

- inertisiert ist,

(II) Zugabe mindestens eines Redox-Initiators (D) für die radikalische Polymerisation zu der auf weniger als 5°C gekühlten Monomerlösung,

(III) Polymerisieren der wässrigen Monomerlösung unter im Wesentlichen adiabatischen Bedingungen, wobei dem Reaktor während der Polymerisation keine Wärme von außen zugeführt und der Reaktor während der Polymerisation nicht gekühlt wird, und wobei die Starttemperatur der Polymerisation weniger als 5°C beträgt und sich die Mischung unter dem Einfluss der gebildeten Polymerisationswärme auf eine Temperatur von 60°C bis 100°C erwärmt und ein Polymergel gebildet wird, sowie

(IV) Trocknen des erhaltenen Polymergels.

In einer bevorzugten Ausführungsform der Erfindung handelt es sich bei dem Stabilisator um 2-Mercaptobenzothiazol oder ein Salz davon.

Überraschenderweise wurde gefunden, dass mittels des genannten Polymeristionsverfahrens auch bei Starttemperaturen von weniger als 5°C (Meth)acrylamid umfassende Homo- oder Copolymere erhalten werden, welche eine hohe Viskosität, ein hohes Molekulargewicht aber einen niedrigen Gelanteil aufweisen.

Verzeichnis der Abbildungen:

Abbildung 1:    Teilweise konischer Reaktor zur Durchführung des erfindungsgemäßen Verfahrens

Abbildung 2:    Vollständig konischer Reaktor zur Durchführung des erfindungsgemäßen Verfahrens

Abbildung 3:    Grafische Darstellung eines Langzeit-Lagertests der Polymere 1 und V1

Zu der Erfindung ist im Einzelnen das Folgende auszuführen:

Bei dem erfindungsgemäßen Verfahren zur Herstellung von wasserlöslichen Homo- oder Copolymeren des (Meth)acrylamids durch radikalische Polymerisation in wässriger Lösung handelt es sich um ein Verfahren der Gelpolymerisation. Hierbei werden die Monomere in wässriger Lösung in einer vergleichsweise hohen Konzentration, nämlich 25 bis 45 Gew. % eingesetzt. Aufgrund der hohen Konzentration bleibt der Ansatz im Zuge der Polymerisation nicht flüssig, sondern es wird ein festes, wasserhaltiges Polymergel erhalten. Das Rühren des Ansatzes im Zuge der Polymerisation ist aufgrund der hohen Viskosität naturgemäß nicht möglich. Das Polymergel kann nach der Polymerisation zerteilt und getrocknet werden. Bei dieser Vorgehensweise verbleiben zugegebene Hilfsstoffe und Additive notwendigerweise im Polymerpräparat.

Herzustellende Homo- oder Copolymere von (Meth)acrylamid

Mittels des erfindungsgemäßen Verfahrens sind wasserlösliche Homo- oder Copolymere des (Meth)acrylamids herstellbar. Sie umfassen monoethylenisch ungesättigte, hydrophile Monomere (A1), wobei es sich bei mindestens einem der Monomere um (Meth)acrylamid handelt. Optional können von den hydrophilen Monomeren (A1) verschiedene monoethylenisch ungesättigte, amphiphile Monomere (A2) sowie weitere ethylenisch ungesättigte Monomere (A3) vorhanden sein.

Hydrophile Monomere (A1)

Die monoethylenischen Monomere (A1) sind hydrophil. Der Begriff "hydrophil" im Sinne dieser Erfindung bedeutet, dass die Monomere (A) in der zur Polymerisation einzusetzenden wässrigen Lösung, d.h. einer 25 bis 45 Gew. % Monomere (A1) enthaltenden Lösung, bei der gewünschten Einsatzkonzentration löslich sein sollen. Es ist also nicht zwingend erforderlich, dass einzusetzende Monomere (A) lückenlos mit Wasser mischbar sind, sondern es ist ausreichend, wenn sie der genannten Mindestanforderung genügen. Im Regelfalle sollte die Löslichkeit der hydrophilen Monomere (A) in Wasser bei Raumtemperatur mindestens 50 g/l, bevorzugt mindestens 100 g/l und besonders bevorzugt mindestens 150 g/l betragen.

Monomere (A1a)

Bei hydrophilen, monoethylenisch ungesättigten Monomeren (A1) kann es sich um neutrale Monomere (A1a) handeln. Die Monomere (A1a) umfassen hydrophile Gruppen, welche den Monomeren zumindest eine gewisse Wasserlöslichkeit verleihen. (Meth)acrylamid ist ein Monomer (A1a). Beispiele weiterer Monomere (A1a) umfassen Derivate des (Meth)acrylamids wie N-Methyl(meth)acrylamid, N,N'-Dimethyl(meth)acrylamid oder N-Methylol(meth)acrylamid.

Weitere Beispiele umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether, Polyethylenglykol(meth)acrylat, N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

Monomere (A1b)

Bei hydrophilen, monoethylenisch ungesättigten Monomeren (A1) kann es sich um hydrophile, anionische Monomere (A1b) handeln, welche mindestens eine saure Gruppe bzw. deren Salze umfassen.

Bei den sauren Gruppen handelt es sich bevorzugt um saure Gruppen ausgewählt aus der Gruppe von -COOH, -$SO_3H$ oder -$PO_3H_2$ bzw. deren Salze. Bevorzugt sind COOH-Gruppen und/oder -$SO_3H$-Gruppen umfassende Monomere, besonders bevorzugt -$SO_3H$-Gruppen umfassende Monomere. Selbstverständlich kann es sich auch um die Salze der sauren Monomere handeln. Geeignete Gegenionen umfassen insbesondere Alkalimetallionen wie $Li^+$, $Na^+$ oder $K^+$ sowie Ammoniumionen wie $NH_4^+$ oder Ammoniumionen mit organischen Resten. Beispiele von Ammoniumionen mit organischen Resten umfassen $[NH(CH_3)_3]^+$, $[NH_2(CH_3)_2]^+$, $[NH_3(CH_3)]^+$, $[NH(C_2H_5)_3]^+$, $[NH_2(C_2H_5)_2]^+$, $[NH_3(C_2H_5)]^+$, $[NH_3(CH_2CH_2OH)]^+$, $[H_3N-CH_2CH_2-NH_3]^{2+}$ oder $[H(H_3C)_2N-CH_2CH_2CH_2NH_3]^{2+}$.

Beispiele COOH-Gruppen umfassender Monomere (A1b) umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere (A1b) umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt sind 2-Acrylamido-2-methylpropansulfonsäure (APMS) bzw. deren Salze.

Beispiele Phosphonsäuregruppen umfassender Monomere (A1 b) umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Bevorzugt kann Monomer (A1b) ausgewählt werden aus der Gruppe bestehend aus Acrylsäure, Methacrylsäure, Crotonsäure, Itaconsäure, Maleinsäure, Fumarsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren, besonders bevorzugt aus Acrylsäure und/oder APMS bzw. deren Salzen.

Mononomere (A1 c)

Bei weiteren, monoethylenisch ungesättigten, hydrophilen Monomeren kann es sich um hydrophile, kationische Monomere (A1c) handeln. Geeignete kationische Monomere (A1c) umfassen insbesondere Ammoniumgruppen aufweisende Monomere, insbesondere Ammoniumderivate von N-($\omega$-Aminoalkyl)(meth)acrylamiden oder $\omega$-Aminoalkyl(meth)acrylestern.

Insbesondere kann es sich bei Ammoniumgruppen aufweisenden Monomeren (A1c) um Verbindungen der allgemeinen Formeln $H_2C=C(R^1)-CO-NR^2-R^3-N(R^4)_3^+$ X- (Ia) und/oder $H_2C=C(R^1)-COO-R^3-N(R^4)_3^+$ X- (Ib) handeln. Hierbei steht $R^1$ für H oder Methyl, $R^2$ für H oder eine $C_1$- bis $C_4$-Alkylgruppe, bevorzugt H oder Methyl und $R^4$ für eine bevorzugt lineare $C_1$- bis $C_4$-Alkylengruppe, beispielsweise eine 1,2-Ethylengruppe $-CH_2-CH_2-$ oder eine 1,3-Proplyengruppe $-CH_2-CH_2-CH_2-$. Bei den Resten $R^4$ handelt es sich unabhängig voneinander um $C_1$- bis $C_4$-Alkylreste, bevorzugt Methyl oder eine Gruppe der allgemeinen Formel $-R^5-SO_3H$, wobei $R^5$ für eine bevorzugt lineare $C_1$- bis $C_4$-Alkylengruppe oder eine Phenylgruppe steht, mit der Maßgabe, dass es sich im Regelfalle bei nicht mehr als einem der Substituenten $R^4$ um einen Sulfonsäuregruppen aufweisenden Substituenten handelt. Besonders bevorzugt handelt es sich bei den drei Substituenten $R^4$ um Methylgruppen, d.h. das Monomer weist eine Gruppe $-N(CH_3)_3^+$ auf. X- steht in obiger Formel für ein einwertiges Anion, beispielsweise Cl-. Selbstverständlich kann X- auch für einen entsprechenden Bruchteil eines mehrwertigen Anions stehen, obwohl dies nicht bevorzugt ist. Beispiele bevorzugter Monomere (A1c) der allgemeinen Formel (Ia) bzw. (Ib) umfassen Salze von 3-Trimethylammonium-propyl(meth)-acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Amphiphile Monomere (A2)

Bei den amphiphilen Monomeren (A2) handelt es sich um monoethylenisch ungesättigte, Monomere, welche mindestens eine hydrophile Gruppe und mindestens eine, bevorzugt terminale hydrophobe Gruppe aufweisen. Derartige Monomere dienen dazu, (Meth)acrylamid umfassenden Copolymeren hydrophob assoziierende Eigenschaften zu verleihen.

Unter "hydrophob assoziierende Copolymeren" versteht der Fachmann wasserlösliche Copolymere, welche neben hydrophilen Einheiten (in einer ausreichenden Menge, um die Wasserlöslichkeit zu gewährleisten) seiten- oder endständig hydrophobe Gruppen aufweisen. In wässriger Lösung können die hydrophoben Gruppen miteinander assoziieren. Aufgrund dieser assoziativen Wechselwirkung erhöht sich die Viskosität der wässrigen Polymerlösung im Vergleich zu einem gleichartigen Polymer, welches lediglich keine assoziativen Gruppen aufweist.

Geeignete Monomere (A2) weisen insbesondere die allgemeine Formel $H_2C=C(R^5)-R^6-R^7$ (IIa) auf, wobei $R^5$ für H oder Methyl, $R^6$ für eine verknüpfende hydrophile Gruppe und $R^7$ für eine terminale hydrophobe Gruppe steht. In einer weiteren Ausführungsform kann das Monomer (A2) die allgemeine Formel $H_2C=C(R^5)-R^6-R^7-R^8$ (IIb) aufweisen, wobei $R^5$, $R^6$ und $R^7$ die geschilderte Bedeutung haben, und es sich bei $R^8$ um eine hydrophile Gruppe handelt.

Bei der verknüpfenden, hydrophilen Gruppe $R^6$ kann es sich um eine Alkylenoxideinheiten umfassende Gruppe, beispielsweise eine 5 bis 50 Alkylenoxideinheiten umfassende Gruppe handeln, welche auf geeignete Art und Weise, beispielsweise mittels einer Einfachbindung oder einer geeigneten verknüpfenden Gruppe mit der $H_2C=C(R^5)$-Gruppe verbunden ist, wobei es sich bei zumindest 70 mol %, bevorzugt mindestens 90 mol % der Alkylenoxideinheiten um Ethylenoxid-einheiten handelt. Weiterhin kann es sich um eine quartäre Ammoniumgruppen umfassende Gruppe handeln.

In einer Ausführungsform der Erfindung handelt es sich bei der hydrophoben Gruppe $R^7$ um aliphatische und/oder aromatische, geradkettige oder verzweigte $C_{8-40}$-Kohlenwasserstoffreste $R^{7a}$, bevorzugt $C_{12-32}$-Kohlenwasserstoffreste. In einer weiteren Ausführungsform kann es sich bei der hydrophoben Gruppe $R^7$ um eine Gruppe $R^{7b}$ umfassend Alkylenoxideinheiten mit mindestens 3 Kohlenstoffatomen, bevorzugt mindestens 4 Kohlenstoffatomen handeln.

In einer Ausführungsform der Erfindung handelt es sich bei den Monomeren (A2) um Monomere der allgemeinen Formel $H_2C=C(R^5)-O-(-CH_2-CH(R^8)-O-)_k-R^{7a}$ (IIc) oder $H_2C=C(R^5)-(C=O)-O-(-CH_2-CH(R^8)-O-)_k-R^{7a}$ (IIId).

In den Formeln (IIc) und (IId) hat $R^5$ die oben geschilderte Bedeutung, und die Gruppen $-O-(-CH_2-CH(R^8)-O-)_k-$ bzw. $-(C=O)-O-(-CH_2-CH(R^8)-O-)_k-$ sind spezielle verknüpfende Gruppen $R^6$, d.h. es handelt sich bei (IIc) um einen Vinylether und bei (IId) um einen Acrylsäureester.

Bei der Anzahl der Alkylenoxideinheiten k handelt es sich um eine Zahl von 10 bis 80, bevorzugt 12 bis 60, besonders bevorzugt 15 bis 50 und beispielsweise 20 bis 40. Für den Fachmann auf dem Gebiet der Alkylenoxide ist klar, dass es sich bei den genannten Werten um Mittelwerte handelt.

Bein den Resten $R^8$ handelt es sich unabhängig voneinander für H, Methyl oder Ethyl, bevorzugt H oder Methyl mit der Maßgabe, dass es sich bei mindestens 70 mol % der Reste $R^8$ um H handelt. Bevorzugt handelt es sich bei mindestens 80 mol % der Reste $R^8$ um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

$R^{7a}$ steht für einen aliphatischen und/oder aromatischen, geradkettigen oder verzweigten Kohlenwasserstoffrest mit 8 bis 40 Kohlenstoffatomen, bevorzugt 12 bis 32 C-Atomen. In einer Ausführungsform handelt es sich um aliphatische Kohlenwässerstoffgruppen mit 8 bis 22, bevorzugt 12 bis 18 Kohlenstoffatomen. Beispiele derartiger Gruppen umfassen n-Octyl-, n-Decyl- n-Dodecyl-, n-Tetradecyl-, n-Hexadecyl oder n-Octadecylgruppen. In einer weiteren Ausführungsform handelt es sich um aromatische Gruppen, insbesondere substituierte Phenylreste, insbesondere Distyrylphenylgruppen und/oder Tristyrylphenylgruppen.

In einer weiteren Ausführungsform der Erfindung handelt es sich bei den Monomeren (A2) um Monomere der allgemeinen Formel $H_2C=C(R^5)-R^9-O-(-CH_2-CH(R^{10})-O-)_x-(-CH_2-CH(R^{11})-O-)_y-(-CH_2-CH_2O-)_z-R^{12}$ (IIe).

Bei den Monomeren (A2) der Formel (IIe) ist eine ethylenische Gruppe $H_2C=C(R^5)-$ über eine zweiwertige, verknüpfende Gruppe $-R^9-O-$ mit einem Polyoxyalkylenrest mit Blockstruktur verbunden, wobei die Blöcke $-(-CH_2-CH(R^{10})-O-)_x-$, $-(-CH_2-CH(R^{11})-O-)_l-$, sowie optional $-(-CH_2-CH_2O-)_z-R^{12}$ in der in Formel (IIe) dargestellten Reihenfolge angeordnet sind. Der Übergang zwischen den beiden Blöcken kann abrupt oder auch kontinuierlich erfolgen.

In Formel (IIe) hat $R^5$ die bereits definierte Bedeutung, d.h. $R^5$ steht für H oder eine Methylgruppe.

$R^9$ steht für eine Einfachbindung oder eine zweiwertige, verknüpfende Gruppe, ausgewählt aus der Gruppe bestehend aus $-(C_nH_{2n})-$ [Gruppe $R^{9a}$], $-O-(C_{n'}H_{2n'})-$ [Gruppe $R^{9b}$]- und $-C(O)-O-(C_{n''}H_{2n'})-$ [Gruppe $R^{9c}$]. In den genannten Formeln steht n jeweils für eine natürliche Zahl von 1 bis 6, n' und n" jeweils für eine natürliche Zahl von 2 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Estergruppe -C(O)-O- mit der ethylenischen Gruppe $H_2C=C(R^5)-$ verknüpft sind. Bevorzugt handelt es sich bei den Gruppen $-(C_nH_{2n})-$, $-(C_{n'}H_{2n'})-$ und $-(C_n''H_{2n}'')-$ um lineare aliphatische Kohlenwasserstoffgruppen.

Bevorzugt handelt es sich bei der Gruppe $R^{9a}$ um eine Gruppe ausgewählt aus $-CH_2-$, $-CH_2-CH_2-$ und $-CH_2-CH_2-CH_2-$, besonders bevorzugt ist eine Methylengruppe $-CH_2-$. Bevorzugt handelt es sich bei der Gruppe $R^{9b}$ um eine Gruppe ausgewählt aus $-O-CH_2-CH_2-$, $-O-CH_2-CH_2-CH_2-$ und $-O-CH_2-CH_2-CH_2-CH_2-$, besonders bevorzugt ist $-O-CH_2-CH_2-CH_2-CH_2-$.

Bevorzugt handelt es sich bei der Gruppe $R^{9c}$ um eine Gruppe ausgewählt aus $-C(O)-O-CH_2-CH_2-$, $-C(O)O-CH(CH_3)-CH_2-$, $-C(O)O-CH_2-CH(CH_3)-$, $-C(O)O-CH_2-CH_2-CH_2-CH_2-$ und $-C(O)O-CH_2-CH_2-CH_2-CH_2-CH_2-CH_2-$, besonders bevorzugt sind $-C(O)-O-CH_2-CH_2-$und $-C(O)O-CH_2-CH_2-CH_2-CH_2-$ und ganz besonders bevorzugt ist $-C(O)-O-CH_2-CH_2-$.

Besonders bevorzugt handelt es sich bei der Gruppe $R^9$ um eine Gruppe $R^{9b}$, ganz besonders bevorzugt um $-O-CH_2-CH_2-CH_2-CH_2-$.

Im Block $-(-CH_2-CH(R^{10})-O-)_x$ stehen die Reste $R^{10}$ unabhängig voneinander für H, Methyl oder Ethyl, bevorzugt H oder Methyl mit der Maßgabe, dass es sich bei mindestens 70 mol % der Reste $R^{10}$ um H handelt. Bevorzugt handelt es sich bei mindestens 80 mol % der Reste $R^{10}$ um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten x handelt es sich um eine Zahl von 10 bis 50, bevorzugt 12 bis 40, besonders bevorzugt 15 bis 35, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim zweiten Block $-(-CH_2-CH(R^{11})-O-)_y-$ stehen die Reste $R^{11}$ unabhängig voneinander für Kohlenwasserstoffstoffreste von mindestens 2 Kohlenstoffatomen, beispielsweise 2 bis 10 Kohlenstoffatomen, bevorzugt 2 oder 3 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste $R^{11}$ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen Ethyl, n-Propyl, n-Butyl, n-Pentyl und besonders bevorzugt sind Ethyl- und/oder n-Propylreste. Bei dem Block $-(-CH_2-CH(R^{11})-O-)_y-$ handelt es sich also um einen Block, der aus Alkylenoxideinheiten mit mindestens 4 Kohlenstoffatomen besteht.

Bei der Anzahl der Alkylenoxideinheiten y handelt es sich um eine Zahl von 5 bis 30, bevorzugt 8 bis 25.

In Formel (IIe) steht z für eine Zahl von 0 bis 5, beispielsweise 1 bis 4, d.h. der terminale Block aus Ethylenoxideinheiten ist also nur optional vorhanden. In einer bevorzugten Ausführungsform der Erfindung kann ein Gemisch aus mindestens zwei Monomeren (A2) der Formel (IIe) eingesetzt werden, wobei die Reste $R^5$, $R^9$, $R^{10}$, $R^{11}$, $R^{12}$ sowie die Indices x und y jeweils gleich sind, lediglich bei dem einen der Monomere ist z = 0 während bei dem anderen z > 0, bevorzugt 1 bis 4 ist.

Bei dem Rest $R^{12}$ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei $R^{12}$ um H, Methyl oder Ethyl, besonders bevorzugt um H oder Methyl und ganz besonders bevorzugt um H.

Die hydrophob assoziierende Monomere (A2) der Formeln (IIc), (IId) und (IIe), Acrylamid-Copolymere umfassend diese Monomere und deren Herstellung sind dem Fachmann prinzipiell bekannt, beispielsweise aus WO 2010/133527 und WO 2012/069478.

In einer weiteren Ausführungsform handelt es sich bei dem assoziativen Monomer (A2) um ein kationisches Monomer der allgemeinen Formel $H_2C=C(R^5)$-$C(=O)O$-$R^{13}$-$N^+(R^{14})(R^{15})(R^{16})$ X- (IIf) oder $H_2C=C(R^5)$-$C(=O)N(R^{17})$-$R^{13}$-$N^+(R^{14})(R^{15})(R^{16})$ X- (IIg).

In den Formeln (IIf) und (IIg) hat $R^5$ die oben definierte Bedeutung.

$R^{13}$ steht für einen Alkylenrest, insbesondere für einen 1,ω-Alkylenrest mit 1 bis 8 Kohlenstoffatomen, bevorzugt 2 bis 4 Kohlenstoffatomen und insbesondere 2 oder 3 Kohlenstoffatomen. Beispiele umfassen -$CH_2$-, -$CH_2CH_2$-, -$CH_2CH_2CH_2$- und -$CH_2CH_2CH_2CH_2$-. Besonders bevorzugt sind -$CH_2CH_2$- und -$CH_2CH_2CH_2$-.

$R^{13}$, $R^{14}$ und $R^{15}$ stehen unabhängig voneinander für H oder eine Alkylgruppe mit 1 bis 4 Kohlenstoffatomen, bevorzugt für H oder Methyl. $R^{13}$ steht bevorzugt für H und $R^{14}$ und $R^{15}$ stehen bevorzugt für Methyl. X- steht für ein negativ geladenes Gegenion, insbesondere ein Halogenidion ausgewählt aus F-, Cl-, Br- oder I-, bevorzugt Cl- und/oder Br-.

$R^{16}$ steht für eine aliphatische und/oder aromatische, lineare oder verzweigte Kohlenwasserstoffgruppe mit 8 bis 30 Kohlenstoffatomen, bevorzugt 12 bis 18 Kohlenstoffatomen. Bei $R^{16}$ kann es sich insbesondere um aliphatische Kohlenwasserstoffreste mit 8 bis 18, bevorzugt 12 bis 18 Kohlenstoffatomen handeln. Beispiele derartiger Gruppen umfassen n-Octyl-, n-Decyl-, n-Dodecyl-, n-Tetradecyl-, n-Hexadecyl oder n-Octadecylgruppen, bevorzugt sind n-Dodecyl-, n-Tetradecyl-, n-Hexadecyl oder n-Octadecylgruppen.

Bevorzugt handelt es sich um ein Monomer der allgemeinen Formel (IIg). Beispiele derartiger Monomere umfassen N-(Meth)acrylamidopropyl-N,N-dimethyl-N-dodecylammoniumchlorid, N-(Meth)acrylamidopropyl-N,N-dimethyl-N-tetradecylammoniumchlorid, N-(Meth)acrylamidopropyl-N,N-dimethyl-N-hexadecylammoniumchlorid oder N-(Meth)crylamidopropyl-N,N-dimethyl-N-octadecylammoniumchlorid bzw. die entsprechenden Bromide. Derartige Monomere sowie Acrylamid-Copolymere mit derartigen Monomeren sind bekannt und beispielsweise in US 7,700,702 B2 beschrieben.

Weitere Monomere (A3)

Neben den hydrophilen Monomeren (A1) und/oder assoziativen Monomeren (A2) können Acrylamid-Copolymere optional von den Monomeren (A1) und (A2) verschiedene ethylenisch ungesättigte Monomere, bevorzugt monoethylenisch ungesättigte Monomere (A3) umfassen. Selbstverständlich können auch Gemische mehrerer verschiedener Monomere (A3) eingesetzt werden. Derartige Monomere können zur Feinsteuerung der Eigenschaften von Acrylamid-Copolymeren verwendet werden.

Bei den Monomeren (A3) kann es sich beispielsweise um monoethylenisch ungesättigte Monomere handeln, welche einen hydrophoberen Charakter haben als die hydrophilen Monomere (A1) und die dementsprechend nur in geringem Maße wasserlöslich sind. Im Regelfalle beträgt die Löslichkeit der Monomere (A3) in Wasser bei Raumtemperatur weniger als 50 g/l, insbesondere weniger als 30 g/l. Beispiele derartiger Monomere umfassen N-Alkyl- und N,N'-Dialkyl(meth)acrylamide, wobei die Anzahl der Kohlenstoffatome in den Alkylresten zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

Weiterhin kann es sich bei Monomeren (A3) auch um ethylenisch ungesättigte Monomere mit mehr als einer ethylenischen Gruppe handeln. Derartige Monomere können in Spezialfällen eingesetzt werden, um eine leichte Vernetzung der Acrylamid-Polymere zu erreichen.

Ihre Menge sollte im Regelfalle 2 Gew.-%, bevorzugt 1 Gew.-% und insbesondere 0,5 Gew.-% bezüglich der Summe aller Monomere nicht überschreiten. Besonders bevorzugt handelt es sich auch bei den Monomeren (A3) ausschließlich um monoethylenisch ungesättigte Monomere.

Acrylamid-Polymere (P)

In einer Ausführungsform der Erfindung handelt es sich um ein Homopolymer von Methacrylamid oder von Acrylamid, bevorzugt um ein Homopolymer von Acrylamid. Der Begriff "Homopolymer" soll auch Copolymere aus Acrylamid und Methacrylamid einschließen.

(Meth)acrylamid-Copolymere umfassen neben (Meth)acrylamid, bevorzugt Acrylamid, mindestens ein weiteres, von (Meth)acrylamid verschiedenes, monoethylenisch ungesättigtes Monomer. Es handelt sich hierbei um mindestens ein Monomer ausgewählt aus der Gruppe von -von (Meth)acrylamid verschiedenen- hydrophilen Monomeren (A1), amphiphilen Monomeren (A2) oder weiteren Monomeren (A3). Bevorzugte (Meth)acrylamid-Copolymere umfassen neben (Meth)acrylamid mindestens ein weiteres -davon verschiedenes- hydrophiles Monomer (A1). Andere bevorzugte (Meth)acrylamid-Copolymere umfassen neben (Meth)acrylamid mindestens ein weiteres -davon verschiedenes- hydrophiles Monomer (A1) sowie mindestens ein hydrophiles Monomer (A2).

Die Menge aller hydrophilen Monomere (A1) zusammen, d.h. einschließlich von (Meth)acrylamid beträgt mindestens 70 Gew. % bezüglich der Menge aller Monomere, bevorzugt mindestens 80 Gew. % und besonders bevorzugt mindestens 90 Gew. %.

In (Meth)acrylamid-Copolymeren handelt es sich in der Regel bei mindestens 20 Gew. %, insbesondere mindestens 30 Gew. %, bevorzugt mindestens 50 Gew. %, besonders bevorzugt mindestens 60 Gew. % und beispielsweise mindestens 70 Gew. % der monoethylenisch ungesättigten Monomere (A) um (Meth)acrylamid, wobei sich die Mengenangabe auf die Summe aller Monomere bezieht.

Falls vorhanden kann die Menge amphiphiler Monomere (A2) bis zu 15 Gew. %, bezogen auf die Gesamtmenge aller Monomere in Acrylamid-Copoymeren betragen, beispielsweise 0,1 bis 15 Gew.-%, insbesondere 0,2 bis 10 Gew.-%, bevorzugt 0,5 bis 5 Gew.-% und beispielsweise 0,5 bis 2 Gew.-%.

Falls überhaupt vorhanden, kann die Menge optional vorhandener Monomere (A3) bis zu 15 Gew. % betragen, bevorzugt bis zu 10 Gew. %, besonders bevorzugt bis zu 5 Gew. %, jeweils bezogen auf die Gesamtmenge aller Monomere. Eine Obergrenze für ethylenisch ungesättigte Monomere mit mehr als einer ethylenischen Gruppe wurde bereits genannt. Ganz besonders bevorzugt sind keine Monomere (A3) vorhanden.

Außer den Monomeren (A1), (A2) und (A3) sind im Regelfalle keine weiteren Monomere vorhanden, d.h. die Summe der Monomere (A1), (A2) und (A3) beträgt in der Regel 100%.

In einer Ausführungsform der Erfindung handelt es sich um ein Copolymer umfassend 85 Gew. % bis 99,9 Gew. % hydrophile Monomere (A1) umfassend mindestens (Meth)acrylamid, bevorzugt 90 Gew. % bis 99,8 Gew. %, besonders bevorzugt 95 Gew. % bis 99,5 sowie 0,1 Gew. % bis 15 Gew. % amphiphile Monomere (A2), bevorzugt 0,2 Gew. % bis 10 Gew. %, besonders bevorzugt 0,5 Gew. % bis 5 Gew. %, wobei die Summe aller Monomere (A1) und (A2) 100 Gew. % beträgt.

In einer bevorzugten Ausführungsform handelt es sich bei dem (Meth)acrylamid-Polymer um Copolymer umfassend (Meth)acrylamid und mindestens ein anionisches, monoethylenisch ungesättigtes, hydrophiles Monomer (A1 b). Insbesondere handelt es sich bei dem Monomer (A1 b) um ein Monomer, welches mindestens eine saure Gruppe ausgewählt aus der Gruppe von - COOH, -SO$_3$H oder -PO$_3$H$_2$ bzw. deren Salze, bevorzugt -COOH und/oder -SO$_3$H bzw. deren Salze umfasst.

In einer bevorzugten Ausführungsform handelt es sich bei dem Acrylamid-Polymer P um ein Copolymer umfassend (Meth)acrylamid und Acrylsäure bzw. deren Salze. Es kann sich hierbei insbesondere um ein Copolymer handeln, welches 60 bis 80 Gew. % (Meth)acrylamid sowie 20 bis 40 Gew. % Acrylsäure umfasst. Optional kann das Copolymer mindestens ein amphiphiles Comonomer (A2) in einer Menge von bis zu 15 Gew. %, bevorzugt 0,2 bis 10 Gew. % umfassen. Besonders bevorzugt handelt es sich hierbei um ein amphiphiles Monomer der allgemeinen Formel (IIe) H$_2$C=C(R$^5$)-R$^9$-O-(-CH$_2$-CH(R$^{10}$)-O-)$_x$-(-CH$_2$-CH(R$^{11}$)-O-)$_y$-(-CH$_2$-CH$_2$O-)$_z$-R$^{12}$. Die Reste und Indices sowie deren bevorzugte Bereiche wurden bereits definiert.

In einer weiteren bevorzugten Ausführungsform handelt es sich bei dem Acrylamid-Polymer P um ein Copolymer umfassend (Meth)acrylamid und ATBS (2-Acrylamido-2-methylpropan-1-sulfonsäure, H$_2$C=CH-CO-NH-C(CH$_3$)$_2$-CH$_2$-SO$_3$H bzw. deren Salze. Es kann sich hierbei insbesondere um ein Copolymer handeln, welches 60 bis 80 Gew. % (Meth)acrylamid sowie 40 bis 60 Gew. % AMPS umfasst. Optional kann das Copolymer mindestens ein amphiphiles Comonomer (A2) in einer Menge von bis zu 15 Gew. %, bevorzugt 0,2 bis 10 Gew. % umfassen. Besonders bevorzugt handelt es sich hierbei um ein amphiphiles Monomer der allgemeinen Formel (IIe) H$_2$C=C(R$^5$)-R$^9$-O-(-CH$_2$-CH(R$^{10}$)-O-)$_x$-(-CH$_2$-CH(R$^{11}$)-O-)$_y$-(-CH$_2$-CH$_2$O-)$_z$-R$^{12}$. Die Reste und Indices sowie deren bevorzugte Bereiche wurden bereits definiert.

In einer weiteren bevorzugten Ausführungsform handelt es sich bei dem (Meth)acrylamid-Polymer um ein Copolymer umfassend (Meth)acrylamid und mindestens zwei anionische, monoethylenisch ungesättigte, hydrophile Monomere (A1 b).

Insbesondere handelt es sich bei den Monomeren (A1b) um Monomere, welche mindestens eine saure Gruppe ausgewählt aus der Gruppe von -COOH, -SO$_3$H oder -PO$_3$H$_2$ bzw. deren Salze, bevorzugt -COOH und/oder -SO$_3$H bzw. deren Salze umfassen. Bevorzugt handelt es sich bei einem derartigen Acrylamid-Polymer um ein Copolymer, welches (Meth)acrylamid, 2-Acrylamido-2-methylpropansulfonsäure (AMPS) und Acrylsäure umfasst. Es kann sich hierbei insbesondere um ein Copolymer handeln, welches 40 bis 60 Gew. % (Meth)acrylamid sowie 20 bis 30 Gew. % Acrylsäure sowie 20 bis 30 Gew. % AMPS umfasst. Optional kann das Copolymer mindestens ein amphiphiles Comonomer (A2) in einer Menge von bis zu 15 Gew. %, bevorzugt 0,2 bis 10 Gew. % umfassen. Besonders bevorzugt handelt es sich hierbei um ein amphiphiles Monomer der allgemeinen Formel (IIe) H$_2$C=C(R$^5$)-R$^9$-O-(-CH$_2$-CH(R$^{10}$)-O-)$_x$-(-CH$_2$-CH(R$^{11}$)-O-)$_y$-(-CH$_2$-CH$_2$O-)$_z$-R$^{12}$. Die Reste und Indices sowie deren bevorzugte Bereiche wurden bereits definiert.

In einer weiteren bevorzugten Ausführungsform handelt es sich bei dem (Meth)acrylamid-Polymer um Copolymer umfassend (Meth)acrylamid und mindestens ein kationisches, monoethylenisch ungesättigtes, hydrophiles Monomer (A1c).

Bei den Monomeren (A1c) kann es sich insbesondere um Monomere $H_2C=C(R^1)-CO-NR^2-R^3-N(R^4)_3^+$ X- (Ia) und/oder $H_2C=C(R^1)-COO-R^3-N(R^4)_3^+$ X- (Ib) handeln. Die Reste und Indices sowie deren bevorzugte Bereiche wurden bereits definiert. Es kann sich hierbei insbesondere um ein Copolymer handeln, welches 60 bis 80 Gew. % (Meth)acrylamid sowie 20 bis 40 Gew. % kationische Monomere (A1c) umfasst. Optional kann das Copolymer mindestens ein amphiphiles Comonomer (A2) in einer Menge von bis zu 15 Gew. %, bevorzugt 0,2 bis 10 Gew. % umfassen.

In einer weiteren bevorzugten Ausführungsform handelt es sich bei dem (Meth)acrylamid-Polymer um Copolymer umfassend (Meth)acrylamid, mindestens ein anionisches, monoethylenisch ungesättigtes, hydrophiles Monomer (A1b) sowie mindestens ein amphiphiles Monomer (A2) der allgemeinen Formel $H_2C=C(R^5)-C(=O)O-R^{13}-N^+(R^{14})(R^{15})(R^{16})$ X- (IIf) oder $H_2C=C(R^5)-C(=O)N(R^{17})-R^{13}-N^+(R^{14})(R^{15})(R^{16})$ X- (IIg). Bevorzugt handelt es sich um ein Monomer der allgemeinen Formel (IIg). Die Reste und Indices sowie deren bevorzugte Bereiche wurden bereits definiert. Es kann sich hierbei insbesondere um ein Copolymer handeln, welches 60 bis 80 Gew. % (Meth)acrylamid sowie 10 bis 40 Gew. % anionische Monomere (A1b) sowie 0,1 bis 10 Gew. % des besagten Monomers (A2) der Formel (IIf) und/oder (IIg), bevorzugt (IIg) umfasst.

In einer bevorzugten Ausführungsform weist das erfindungsgemäß herzustellende, (Meth)acrylamid umfassende Homo- oder Copolymer ein gewichtsmittleres Molekulargewicht Mw von mindestens von $1*10^6$ g/mol, insbesondere von $1*10^6$ g/mol bis $30*10^6$ g/mol, bevorzugt $5*10^6$ g/mol bis $30*10^6$ g/mol, beispielsweise 5 bis $25*10^6$ g/mol, beispielsweise etwa $20*10^6$ g/mol auf.

Erfindungsgemäßes Verfahren

Verfahrensschritt (I)

In Verfahrensschritt (I) wird eine wässrige Lösung für die Polymerisation bereitgestellt, welche mindestens Wasser, die zu verwendenden Monomere (A), mindestens einen Stabilisator (B) zur Verhinderung von Polymerabbau sowie mindestens einen Azoinitiator (C) umfasst.

Neben dem Lösemittel Wasser können optional geringe Mengen mit Wasser mischbarer organischer Lösemittel verwendet werden, wobei der Anteil von Wasser im Regelfalle mindestens 85 Gew.-% und bevorzugt mindestens 95 Gew.-% und besonders bevorzugt mindestens 98 Gew. % beträgt, jeweils bezogen auf die Summe aller Lösemittel zusammen. In einer besonders bevorzugten Ausführungsform der Erfindung wird ausschließlich Wasser als Lösemittel verwendet.

Monomere (A)

Die wässrige Monomerlösung umfasst 25 bis 45 Gew. %, bevorzugt 30 Gew. % bis 40 Gew. % ethylenisch ungesättigter Monomere (A), wobei die Mengenangabe auf die Menge aller Komponenten der wässrigen Lösung bezogen ist. Erfindungsgemäß handelt es sich hierbei bei mindestens 70 Gew. % der Monomere um monoethylenisch ungesättigte, hydrophile Monomere (A1), mit der Maßgabe, dass es sich bei mindestens einem der Monomere (A1) um (Meth)acrylamid handelt. Geeignete Monomerenzusammensetzungen und Mengenverhältnisse einschließlich bevorzugter Zusammensetzungen und Mengenverhältnisse wurden bereits oben ausführlich beschrieben. Auf diese Beschreibung wird an dieser Stelle ausdrücklich verwiesen.

Stabilisatoren (B)

Die wässrige Lösung der Monomere umfasst weiterhin 0,1 bis 2 Gew. % -bezogen auf die Summe aller Monomere- mindestens eines Stabilisators (B) zur Verhinderung von Polymerabbau durch molekularen Sauerstoff.

Bei den Stabilisatoren (B) zur Verhinderung von Polymerabbau handelt es sich um sogenannte "Radikalfänger", d.h. um Verbindungen, welche mit freien Radikalen (beispielsweise Sauerstoff, durch UV-Licht oder andere RedOx-Prozesse gebildeten Radikalen) reagieren können, so dass die besagten Radikale nicht mehr das Polymer angreifen und somit abbauen können.

Ihre Reaktivität im Hinblick auf die der in der radikalischen Polymerisation auftretenden Radikale darf jedoch nicht so groß sein, dass sie signifikanten Einfluss auf die Polymerisation nehmen. Geeignete Stabilisatoren weisen daher nur eine geringe Reaktivität unter den Bedingungen der Polymerisation auf oder sind inert gegenüber den bei der Polymerisation auftretenden Radikalen.

Derartige Stabilisatoren sind dem Fachmann prinzipiell bekannt. Erfindungsgemäß handelt es sich um Stabilisatoren ausgewählt aus der Gruppe von schwefelhaltigen Verbindungen, sterisch gehinderten Aminen, N-Oxiden, Nitrosoverbindungen, aromatische Hydroxyverbindungen oder Ketone.

Beispiele von Schwefelverbindungen umfassen Thioharnstoff, substituierte Thioharnstoffe wie N,N'-Dimethylthioharnstoff, N,N'-Diethylthioharnstoff, N,N'-Diphenylthioharnstoff, Thiocyanate, wie bspw. Ammoniumthiocyant oder Kaliumthiocyanat, Tetramethylthiuramdisulfid oder Mercaptane wie 2-Mercaptobenzothiazol oder 2-Mercaptobenzimidazol bzw. deren jeweilige Salze, beispielsweise die Natriumsalze, Natriumdimethyldithiocarbamat, 2,2'-Dithio-bis(benzthiazol), 4,4'-Thiobis(6-t-butyl-m-Kresol)

Weitere Beispiele umfassen Dicyandiamid, Guanidin, Cyanamid, Paramethoxyphenol, 2,6-Di-t-butyl-4-methylphenol, Butylhydroxyanisol, 8-Hydroxychinolin, 2,5-Di(t-Amyl)hydrochinon, 5-Hydroxy-1,4-Naphtochinon, 2,5-Di(t-amyl)hydrochinon, Dimedon, Propyl-3,4,5-trihydroxybenzoat, Ammonium N-Nitrosophenylhydroxylamin, 4-Hydroxy-2,2,6,6-tetramethyoxylpiperidin, (N-(1,3-Dimethylbutyl)N'-phenyl-p-phenylendiamin oder 1,2,2,6,6-Pentamethyl-4-piperidinol.

Bevorzugt handelt es sich um sterisch gehinderte Amine wie 1,2,2,6,6-Pentamethyl-4-piperidinol und Schwefelverbindungen, bevorzugt Mercaptoverbindungen, insbesondere 2-Mercaptobenzothiazol oder 2-Mercaptobenzimidazol bzw. deren jeweilige Salze wie beispielsweise die Natriumsalze und besonders bevorzugt sind 2-Mercaptobenzothiazol oder Salze davon, beispielsweise die Natriumsalze.

## Azoinitiatoren (C)

Erfindungsgemäß umfasst die wässrige Lösung weiterhin mindestens einen Azoinitiator (C) mit einer 10 h $t_{1/2}$ in Wasser von 40°C bis 75°C, bevorzugt 50°C bis 75°C. Die Temperatur der 10-Stunden-Halbwertszeit von Azoinitiatoren ist eine dem Fachmann bekannte Größe, welche das Verhalten von Initiatoren beschreibt. Die Werte beschreiben, bei welcher Temperatur nach jeweils 10 h die Hälfte der ursprünglich vorhandenen Initiatormenge zerfallen ist. Entsprechende Werte können beispielsweise den Datenblättern für Azoinitiatoren entnommen werden. Aufgrund der 10 h $t_{1/2}$ von 40°C bis 75°C zerfallen die Initiatoren bei Raumtemperatur nicht oder zumindest nicht mit wesentlicher Geschwindigkeit. Die Werte beziehen sich auf eine Lösung in Wasser.

Die Azoinitiatoren sind bevorzugt vollständig wasserlöslich, es ist aber ausreichend, dass sie in der gewünschten Menge in der Monomerlösung löslich sind. AIBN (Azo-bis-(isobutyronitril)) ist beispielsweise in Wasser kaum löslich, in der 25 bis 45 Gew. % Monomere umfassenden wässrigen Lösung aber sehr wohl.

Beispiele geeigneter Azoinitiatoren umfassen 2,2'-Azobis[2-(2-imidazolin-2-yl)propan]dihydrochlorid (10 h $t_{1/2}$ (Wasser): 44°C), 2,2'-Azobis(2-methyl-propionamidin)dihydrochlorid (10 h $t_{1/2}$ (Wasser): 56°C), 2,2'-Azobis[N-(2-carboxyethyl)-2-methylpropionamidinehydrat (10 h $t_{1/2}$ (Wasser): 57°C), 2,2'-Azobis{2-[1-(2-hydroxyethyl)-2-imidazolin-2-yl]propan}dihydrochlorid (10 h $t_{1/2}$ (Wasser): 60°C), 2,2'-Azobis(1-imino-1-pyrrolidino-2-ethylpropan)dihydrochlorid (10 h $t_{1/2}$ (Wasser): 67°C) oder Azo-bis-(isobutyronitril) (10 h $t_{1/2}$ (Toluol): 67°C).

Der pH-Wert der wässrigen Monomerlösung wird auf einen pH-Wert < 7, beispielsweise 3 bis 6,9, insbesondere 5 bis 6,9, bevorzugt 5 bis 6,5, besonders bevorzugt 5,5 bis 6,5 und beispielsweise etwa 6 eingestellt. Dies erfolgt -je nach Art und Menge der verwendeten Monomere- mit Säuren oder Basen.

Weiterhin wird die Monomerlösung auf eine Temperatur von weniger als 5°C, bevorzugt -4°C bis +4°C, besonders bevorzugt -4°C bis 0°C gekühlt. Die Monomerlösung wird bis zum Start der Polymerisation auf einer Temperatur von weniger als 5°C gehalten.

In einem weiteren Teilschritt wird die Monomerlösung inertisiert, d.h. eventuell noch in der Monomerlösung vorhandener Sauerstoff wird entfernt. Dies kann beispielsweise in prinzipiell bekannter Art und Weise erfolgen, indem man ein Inertgas wie beispielsweise Stickstoff oder Argon durch die Lösung hindurchperlt. Dies kann aber auch unter Verwendung entsprechender Apparaturen erfolgen, beispielsweise der in WO 03/066190 A1 beschriebenen Apparatur.

Die Herstellung der wässrigen Lösung erfolgt durch Mischen der Komponenten mit Wasser sowie optional weiteren, mit Wasser mischbaren Lösemitteln. Die Herstellung der wässrigen Lösung kann im für die Polymerisation vorgesehenen Reaktor erfolgen. Sie kann aber bevorzugt in davon separaten Vorrichtungen erfolgen, so dass der Polymerisationsreaktor schließlich mit der vorbereiteten Lösung gefüllt wird.

Das Mischen der Monomere sowie der weiteren Komponenten kann beispielsweise in einem Mischkessel erfolgen, welcher auf geeignete Art und Weise gekühlt wird, beispielsweise mittels einer Umlaufkühlung. Die Azoinitiatoren (C) können vor dem Kühlen, bevorzugt während oder nach dem Kühlen zugegeben werden. Das Inertisieren erfolgt bevorzugt nach dem Kühlen, ohne dass die Erfindung darauf beschränkt sein soll. Das Inertisieren kann erfolgen, indem man die Mischung im besagten Mischkessel oder einer separaten Apparatur von Sauerstoff befreit, beispielsweise durch Durchleiten eines Inertgases durch die Lösung.

## Weitere Komponenten

Selbstverständlich kann die zur Polymerisation verwendete wässrige Monomerlösung noch weitere Additive und Hilfsmittel für die Polymerisation umfassen, beispielsweise Entschäumer oder Komplexbildner.

Sofern es sich um (Meth)acrylamid-Copolymere handelt, welche amphiphile Monomere (A2) umfassen, können die Copolymere in einer bevorzugten Ausführungsform der Erfindung in Gegenwart mindestens einer nicht-polymerisierbaren, oberflächenaktiven Verbindung (T) hergestellt werden.

Bei der nicht polymerisierbaren, oberflächenaktiven Verbindung (T) handelt es sich vorzugsweise um mindestens ein nichtionisches Tensid, aber auch anionische und kationische Tenside sind geeignet, sofern sie an der Polymerisationsreaktion nicht teilnehmen.

Es kann sich insbesondere um Tenside, bevorzugt nichtionische Tenside der allgemeinen Formel $R^{18}$-Y handeln, wobei $R^{18}$ für einen Kohlenwasserstoffrest mit 8 bis 32, bevorzugt 10 bis 20 und besonders bevorzugt 12 bis 18 Kohlenstoffatomen steht und Y für eine hydrophile Gruppe, bevorzugt eine nichtionische hydrophile Gruppe, insbesondere eine Polyalkoxygruppe.

Bei dem nichtionischen Tensid handelt es sich bevorzugt um einen ethoxylierten langkettigen, aliphatischen Alkohol, welcher optional aromatische Anteile enthalten kann.

Exemplarisch seien genannt: $C_{12}C_{14}$-Fettalkoholethoxylate, $C_{16}C_{18}$-Fettalkoholethoxylate, $C_{13}$-Oxoalkoholethoxylate, $C_{10}$-Oxoalkoholethoxylate, $C_{13}C_{15}$-Oxoalkoholethoxylate, $C_{10}$-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheiten. Optional können auch noch geringe Mengen von höheren Alkylenoxyeinheiten, insbesondere Propylenoxy- und/oder Butylenoxyeinheiten vorhanden sein, wobei die Menge als Ethylenoxyeinheiten aber in der Regel mindestens 80 mol% bezüglich aller Alkylenoxyeinheiten betragen sollte. Geeignet sind insbesondere Tenside ausgewählt aus der Gruppe ethoxylierter Alkylphenole, ethoxylierter, gesättigter iso-C13-Alkohole und/oder ethoxylierter C10-Guerbetalkohole, wobei jeweils 5 bis 20 Ethylenoxyeinheiten, bevorzugt 8 bis 18 Ethylenoxyeinheiten in Alkylenoxyresten vorhanden sind.

Der Zusatz nicht polymerisierbarer, grenzflächenaktiver Verbindungen (T) während der Polymerisation führt zu einer deutlichen Verbesserung anwendungstechnischer Eigenschaften der (Meth)acrylamid-Copolymere, welche insbesondere bei Ölfeldanwendungen wie der tertiären Erdölförderung (Enhanced Oil Recovery, EOR) nützlich ist. Insbesondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll.

Bei der Polymerisation ohne Anwesenheit eines Tensids bilden die amphiphilen Monomere (A2) in dem wässrigen Reaktionsmedium Mizellen. Bei der Polymerisation führt dies dazu, dass die amphiphilen Monomere (A2) nicht gleichmäßig in das Polymer eingebaut werden, sondern das Copolymer Bereich mit einer höheren Dichte der amphiphilen Monomere aufweist. Ist nun bei der Herstellung der Copolymere eine zusätzliche oberflächenaktive Verbindung anwesend, bilden sich mit den amphiphilen Monomeren gemischte Mizellen. Diese gemischten Mizellen enthalten polymerisierbare und nicht polymerisierbare Anteile. Dadurch verteilen sich die amphiphilen Monomere (A2) gleichmäßiger über die Polymerkette. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew.-% bezüglich der Menge aller eingesetzten Monomere eingesetzt werden. Das Gewichtsverhältnis der eingesetzten, nicht polymerisierbaren, grenzflächenaktiven Verbindungen (T) zu den amphiphilen Monomeren (A2) beträgt in der Regel 4:1 bis 1:4, bevorzugt 2:1 bis 1:2, besonders bevorzugt 1,5 : 1 bis 1:1,5 und beispielsweise ca. 1:1.

Verfahrensschritt (II)

Nach dem Bereitstellen der wässrigen Monomerlösung in Verfahrensschritt (I) wird der gekühlten und inertisierten Monomerlösung mindestens ein Redox-Initiator (D) zugesetzt. Redoxinitiatoren können eine radikalische Polymerisation auch bei Temperaturen von weniger als 5°C starten.

Redoxinitiaoren für die radikalische Polymerisation sind dem Fachmann prinzipiell bekannt. Beispiele von Redoxinitiatoren (D) umfassen Systeme auf Basis von $Fe^{2+}/Fe^{3+}$ - $H_2O_2$, $Fe^{2+}/Fe^{3+}$ - Alkylhydroperoxide, Alkylhydroperoxiden - Sulfit, wie beispielsweise t-Butylhydroperoxid - Natriumsulfit, Peroxiden - Thiosulfat oder Alkylhydroperoxide - Sulfinate wie beispielsweise Alkylhydroperoxide/Hydroxymethansulfinate wie beispielsweise t-Butylhydroperoxid - Natrium-hydroxymethansulfinat.

Die Zugabe der Redoxinitiatoren (D) erfolgt erst unmittelbar vor der Polymerisation. Bevorzugt wird eine Lösung, z.B. eine wässrige Lösung der Redoxinitiatoren (D) eingesetzt. Sie können beispielsweise während oder nach dem Befüllen in den Polymerisationsreaktor eindosiert werden. Vorteilhaft können die Redoxinitiatoren (D) während der Befüllung des Reaktors in die Monomerzufuhr des Polymerisationsreaktors eindosiert werden. Um eine rasche Vermischung der Redoxinitiatoren zu gewährleisten, kann die Monomerzufuhr vorteilhaft mit einem statischen Mischer ausgerüstet sein.

Verfahrensschritt (III)

In Verfahrensschritt (III) wird die wässrige Monomerlösung polymerisiert, wobei ein festes Polymergel erhalten wird. Sofern noch nicht im Zuge von Schritt (I) oder (II) erfolgt, wird die vorbereitete wässrige Monomerlösung in einen geeigneten Reaktor zur Polymerisation gefüllt. Der Reaktor und -sofern noch nicht geschehen- die Monomerlösung werden vor der Polymerisation inertisiert.

Die Gelpolymerisation erfolgt in aller Regel ohne Rühren. Sie kann beispielsweise in einem Rohreaktor vorgenommen werden, wie von GB 1,054,028 beschrieben.

Erfindungsgemäß wird die Polymerisation der wässrigen Monomerlösung unter adiabatischen Bedingungen oder zumindest im Wesentlichen adiabatischen Bedingungen durchgeführt, d.h. dem Reaktor wird während der Polymerisation keine Wärme von außen zugeführt und der Reaktor wird während der Reaktion nicht gekühlt. Für den Fachmann ist klar, dass -je nach Innentemperatur des Reaktors bzw. der Umgebungstemperatur- gewisse Wärmemengen aufgrund von Temperaturgradienten über die Reaktorwandung abgegeben bzw. aufgenommen werden können, aber dieser Effekt spielt mit zunehmender Reaktorgröße naturgemäß eine immer geringere Rolle.

Die Starttemperatur der Polymerisation beträgt weniger als 5°C, bevorzugt -4°C bis +4°C, besonders bevorzugt -4°C bis 0°C. Die Polymerisation startet aufgrund der zugesetzten Redoxinitiatoren (D) auch bei solch tiefen Temperaturen. Durch die freiwerdende Polymerisationswärme erwärmt sich die Mischung. Nach Erreichen einer ausreichenden Temperatur beginnt auch der Azoinitiator (C) zu zerfallen und startet nun ebenfalls die Polymerisation. Die Mischung erwärmt sich unter dem Einfluss der gebildeten Polymerisationswärme auf eine Temperatur von 60°C bis 100°C.

Nach der Polymerisation kann das gebildete Polymergel dem Reaktor entnommen werden. Dies kann mittels mechanischer Hilfsmittel erfolgen, beispielsweise im Falle eines Rohrreaktors mithilfe eines Stempels. Weiterhin kann der Reaktor über an der Unterseite angeordnete Auslassventile verfügen und das Polymer mithilfe von Gasen wie Pressluft oder Stickstoff aus dem Reaktor ausgedrückt werden.

Besonders vorteilhaft können zur Durchführung der Polymerisation konische Reaktoren verwendet werden, wie beispielsweise von US 5,633,329 oder US 7,619,046 B2 beschrieben.

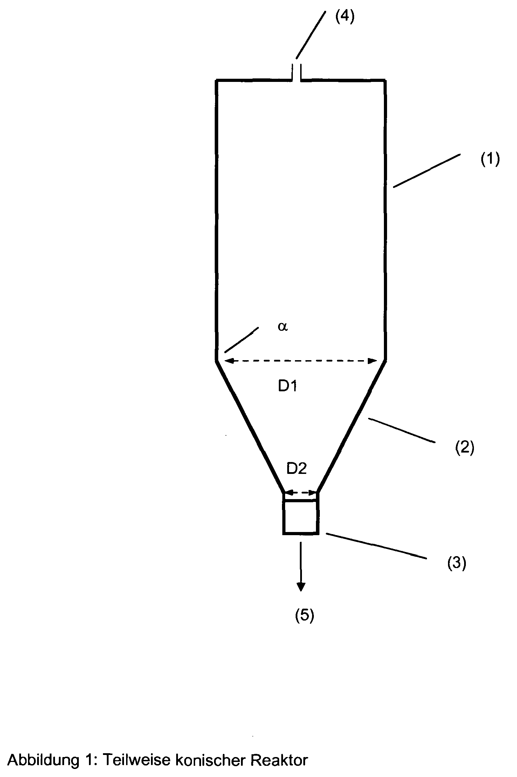

Abbildung 1 zeigt einen konischen Reaktor, welcher zur Durchführung der Gelpolymerisation verwendet werden kann. Es handelt sich hierbei um einen vertikalen Rohrreaktor (1) mit einem Durchmesser D1, der am unteren Ende eine konische Verjüngung (2) aufweist, wobei der Durchmesser am Ende der konischen Verjüngung D2 beträgt. Das Verhältnis D1 / D2 beträgt in der Regel 2:1 bis 25:1, bevorzugt 2:1 bis 20:1 und beispielsweise 3:1 bis 10:1. Der Winkel α zwischen der Wandung im zylindrischen Teil (1) und der Wandung im Bereich der konischen Verjüngung (2) beträgt mehr als 120° und weniger als 180°, insbesondere 135° bis 175°, bevorzugt 150° bis 175° und beispielsweise 155° bis 170°. Das Verhältnis von Höhe zu Durchmesser D1 des zylindrischen Teil (1) des Reaktors kann 4 bis 40 betragen. Das Innenvolumen der Reaktoren wird vom Fachmann je nach der gewünschten Produktionskapazität gewählt und kann 1 bis 100 m$^3$ betragen, beispielsweise 5 bis 50 m$^3$, ohne dass die Erfindung hierauf beschränkt sein soll.

Die Innenfläche der Reaktor ist bevorzugt mit einer Beschichtung zur Verringerung der Haftung der Reaktionsmischung an der Reaktorwand versehen, beispielsweise mit einer TeflonBeschichtung.

Am unteren Ende weist der Reaktor eine Absperrvorrichtung (3) auf. Der Reaktor umfasst weiterhin mindestens eine Zuführung (4) auf. Durch diese Zuführung (4) können die wässrige Monomerlösung und/oder Gase und/oder weitere Komponenten in den Reaktor geleitet werden. Bei Gasen kann es sich insbesondere um Inertgase wie Stickstoff, Argon oder CO$_2$ handeln. Mit Inertgasen kann der Reaktor zum Inertisieren gespült werden. Selbstverständlich können auch verschiedene Zuführungen für verschiedene Komponenten vorhanden sein, beispielsweise separate Zuführungen für die wässrige Reaktionslösung sowie Gase. Die mindestens eine Zuführung (4) kann bevorzugt auf der Oberseite des Reaktors oder seitlich im oberen Bereich des Reaktors angebracht werden, aber es sind selbstverständlich auch andere Anordnungen möglich.

Der Reaktor kann selbstverständlich noch weitere Bauelemente umfassen, beispielsweise weitere Zuführungen, beispielsweise für Druckluft oder Lösemittel oder Austragsvorrichtungen für das Gel wie beispielsweise im Reaktor angeordnete bewegliche Stempel wie von GB 1,054,028 beschrieben.

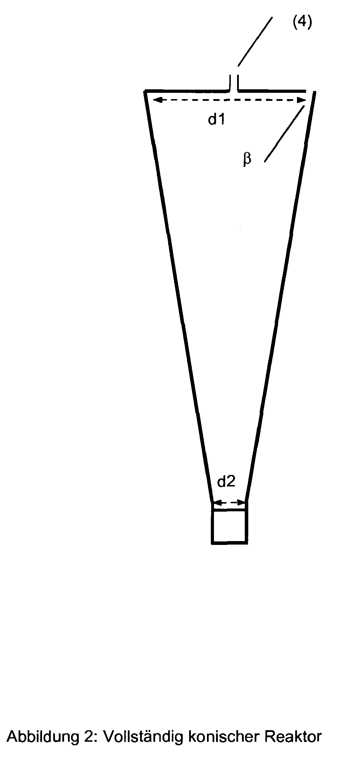

Abbildung 2 zeigt einen vollständig konischen Reaktor. Er ist ähnlich aufgebaut wie der soeben geschilderte teilweise konische Reaktor, weist aber keinen zylindrischen Abschnitt mehr auf, wobei der Durchmesser am oberen Ende des konischen Reaktors d1 beträgt und am unteren Ende d2. Das Verhältnis d1 / d2 beträgt in der Regel 1,1:1 bis 25:1, insbesondere 2:1 bis 25:1, bevorzugt 2.1 bis 10:1 und beispielsweise 3.1 bis 10:1. Der Winkel β zwischen dem oberen Durchmesser d1 und der Reaktorwandung beträgt mehr als 45° und weniger als 90°, bevorzugt 60° bis 89°, beispielsweise 70° bis 88°. Im Übrigen wird auf die obige Beschreibung verwiesen.

Zur Durchführung der Polymerisation wird die gekühlte Monomerlösung durch die Zuführung (4) oder eine andere Zuführung in den vollständig oder teilweise konischen Reaktor übergeführt. Der Reaktor sollte vor und/oder während des Befüllens mit einem Inertgas, beispielsweise Stickstoff, Argon oder Kohlendioxid gespült werden.

Die Polymerisation verläuft wie bereits oben beschrieben.

Zur Entnahme des Polymergels aus dem Reaktor nach Beendigung der Polymerisation wird die Absperrvorrichtung (3) geöffnet. Im Regelfalle ist das erhaltene Polymergel fest und fließt nicht ohne zusätzliche Maßnahmen aus dem Reaktor. Sofern der verwendete Reaktor über mechanische Hilfsmittel verfügt, wie beispielsweise einen im Reaktor angeordneten beweglichen Stempel wie von GB 1,054,028 beschrieben, kann das Polymergel unter Verwendung derartiger Hilfsmittel ausgepresst werden.

Aus dem oben beschriebenen, vollständig oder teilweise konischen Reaktor kann das Auspressen des Polymergels bevorzugt unter Verwendung von Gasen oder Flüssigkeiten vorgenommen werden. Hierzu presst man am Kopf des Rohrreaktors über die Zuführung (4) oder eine andere Zuführung ein Gas auf. Hierzu können alle Gase verwendet werden, welche mit dem Polymergel nicht reagieren können. Vorteilhaft können hierzu Inertgase wie Stickstoff, Kohlendioxid oder Argon über die Zuführung (4) injiziert werden, weil diese Zuführung bereits vorhanden ist. Es ist aber auch möglich andere Gase, wie beispielsweise Pressluft zu verwenden. Alternativ kann man auch am Kopf des Reaktors eine inerte Flüssigkeit, insbesondere ein Fällungsmittel für das Polymer, einpressen. Der Druck des Gases oder der Flüssigkeit wird vom Fachmann geeignet gewählt und kann beispielsweise $2*10^5$ bis $65*10^5$ Pa, insbesondere $4*10^5$ bis $25*10^5$ Pa betragen. Er wird insbesondere so gewählt, dass das Polymergel gleichmäßig aus dem Reaktor ausgetragen wird,

Verfahrensschritt (IV)

Das erhaltene Polymergel wird in einem weiteren Verfahrensschritt getrocknet. Vor der Trocknung wird das Polymergel bevorzugt zerkleinert. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das wasserlösliche (Meth)acrylamid Homo- oder Copolymer als Granulat oder Pulver.

Weitere Verfahrensschritte

Das erfindungsgemäße Verfahren kann selbstverständlich noch weitere Verfahrensschritte umfassen.
Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen.
Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.
Die folgenden Beispiele sollen die Erfindung näher erläutern:

Verwendete Methoden:

Bestimmung des Gelanteils:

0,1 g des Polymers wurden in 1 l Leitungswasser bei 25°C gelöst (Konzentration: 1000 ppm). Die Lösung wurde durch ein 315 μm-Sieb filtriert und die Menge des auf dem Sieb verbleibenden Polymergels bestimmt.

Bestimmung MPFR (Millipore filtration ratio)

Die Filtrierbarkeit der Polymerlösungen wurde mit Hilfe des MPFR-Wertes (Millipore filtration ratio) untersucht. Der MPFR-Wert (Millipore filtration ratio) gibt die Abweichung einer Polymer lösung von idealem Filtrationsverhalten an, wobei beim idealen Filtrationsverhalten keine Verringerung der Filtrationsgeschwindigkeit durch das Zusetzen des Filters erfolgt.
Zur Bestimmung der MPFR-Werte wurden etwa 200 ml Polymerlösung mit einer Konzentration von 1.000 ppm bei einem Druck von $1,38*10^5$ Pa durch einen Polycarbonatfilter mit einer Porengröße von 5 μm filtriert. Dabei wurde zeitabhängig die Menge des Filtrats aufgezeichnet. Die Berechnung des MPFR-Wertes erfolgte gemäß der folgenden Formel:

$$MPFR = (t_{180g}-t_{160g})/(t_{80g}-t_{60g}),$$

mit $t_{index}$ = Zeit zu der die angegebene Menge Filtrat gemessen wurde, d.h. $t_{180g}$ ist die Zeit zu der 180 g Filtrat gemessen wurden. Gemäß API RP 63 ("Recommended Practices for Evaluation of Polymers Used in Enhanced Oil Recovery Operations", American Petroleum Institute) sind Werte kleiner 1,3 akzeptabel.

Bestimmung der Viskosität:

Die Viskosität wurde jeweils bei einer Polymerkonzentration von 1000 ppm in Leitungswasser bei 25°C bzw.

60 °C in synth. Meerwasser mit einem Brookfield LVDV-II Viskosimeter mit UL-Adapter gemessen. Dabei kam eine Umdrehungszahl von 6 rpm zum Einsatz.

Langzeitlagerung

Es wurden wässrige Lösungen der zu testenden Polymere (Konzentration 1000 ppm) unter Verwendung von Leitungswasser angesetzt. Anschließend wurde die Lösung in ein Reagenzglas übergeführt und mittels Abschmelzen verschlossen. Die Proben wurden in einem Ofen bei 80°C für bis zu 120 Tage gelagert. Nach Ablauf des Tests wurde jeweils die Viskosität bestimmt.

Herstellung eines amphiphilen Monomers (A2)

$H_2C=CH-O-(CH_2)_4-O-(EO)_{24,5}(BuO)_{16}(EO)_{3,5}$

Abkürzungen

| | | |
|---|---|---|
| HBVE | Hydroxybutylvinylether, $H_2C=CH-O-(CH_2)_4-OH$ | |
| EO | Ethylenoxid | |
| BuO | Butylenoxid (> 85 Gew.-% 1,2-Butylenoxid) | |

Methode: Alkoxylierung von HBVE mit 24,5 EO, gefolgt von 16 BuO, gefolgt von 3,5 EO

Herstellvorschrift:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10 - 20 mbar evakuiert, auf 65 °C aufgeheizt, 70 min bei 65 °C und einem Druck von 10 - 20 mbar betrieben. MeOH wurde abdestilliert. Es wurde dreimal mit $N_2$ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis $p_{max}$ 3.9 bar absolut und $T_{max}$ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.
Es wurde bis Druckkonstanz nachgerührt bei ca. 145-150 °C (1 h), auf 100 °C abgekühlt und bei einem Druck von weniger als 10 mbar für 1 h von Niedrigsiedem befreit. Die Ware wurde bei 80 ° C unter $N_2$ abgefüllt. Die Analytik (OH-Zahl, GPC, 1 H-NMR in $CDCl_3$, 1 H-NMR in MeOD) bestätigte die Struktur HBVE - 22 EO.

In einem 2 l Druckautoklaven mit Ankerrührer wurden 588,6 g (0,543 mol) HBVE-22 EO vorgelegt und der Rührer eingeschaltet. Danach wurden 2,39 g 50 %ige NaOH-Lösung (0,030 mol NaOH, 1,19 g NaOH) zugegeben, Vakuum von <10 mbar angelegt, auf 100 °C erhitzt und für 80 min gehalten, um das Wasser abzudestillieren. Man spülte dreimal mit $N_2$. Danach wurde der Behälter auf Druckdichtigkeit geprüft, 0,5 bar Überdruck (1,5 bar absolut) eingestellt, auf 127 °C aufgeheizt und danach der Druck auf 1,6 bar absolut eingestellt. Es wurden 59,7 g (1,358 mol) EO zudosiert bei 127 °C, $p_{max}$ betrug 3,9 bar absolut. Es wurde 30 min gewartet bis sich Druckkonstanz einstellte, danach wurde auf 1,0 bar absolut entspannt. Es wurden 625,5 g (8,688 mol) BuO (Butylenoxid) bei 127 °C zudosiert, $p_{max}$ betrug 3,1 bar absolut. Ein zwischenzeitliches Entspannen infolge Füllgradzunahme wurde durchgeführt. Man stoppte die BuO-Dosage, ließ 1 h ausreagieren bis der Druck konstant war und entspannte auf 1,0 bar absolut. Danach wurde die Zudosage von BuO fortgeführt. $P_{max}$ betrug weiterhin 3,1 bar (erstes Entspannen nach 610 g BuO, Gesamtdosierzeit BuO 8 h inkl. Entspannungspause). Nach Ende der BuO-Dosage ließ man 8 h nachreagieren und erwärmte dann auf 135 °C. Man entspannte auf 1,6 bar absolut. Danach wurden 83,6 g (1,901 mol) EO (Ethylenoxid) bei 135 °C zudosiert, $p_{max}$ betrug 3,1 bar absolut. Nach Ende der EO-Dosage ließ man 4 h nachreagieren. Es wurde auf 100 °C abgekühlt, Restoxid abgezogen bis der Druck für mindestens 10 min unter 10 mbar lag. Dann erfolgte die Zugabe von 0,5 % Wasser bei 120°C und anschließendes Abziehen bis der Druck für mindestens 10 min unter 10 mbar lag. Das Vakuum wurde mit $N_2$ aufgehoben und es erfolgte die Zugabe von 100 ppm BHT. Die Abfüllung erfolgte bei 80 °C unter $N_2$. Die Analytik (Massenspektrum, GPC, 1 H-NMR in $CDCl_3$, 1 H-NMR in MeOD) bestätigte die mittlere Zusammensetzung HBVE - 24,5 EO - 16 BuO - 3,5 EO.

Beispiel 1:

Herstellung eines Copolymers aus 67 Gew. % Acrylamid und 33 Gew. % Natriumacrylat

| | |
|---|---|
| Sauerstoff-Radikalfänger: | Natrium-2-Mercaptobenzothiazol (0,35 Gew. % bzgl. Monomere |
| Initiierung bei: | 0°C |
| pH | 6,5 |
| Monomerenkonzentration: | 30 Gew. % |

In einem Plastikeimer mit Magnetrührer, pH-Meter und Thermometer wurden 112,8 g einer 35 %-igen wässrigen Lösung von Natriumacrylat vorgelegt und anschließend nacheinander 108,3 g destilliertes Wasser, 164,0 g Acrylamid (49,1%-ige wässrige Lösung), 1,2 g Diethylentriaminpentaessigsäure, Pentanatriumsalz (als 5%-ige wässrige Lösung), 1,3 g Natrium-2-Mercaptobenzothiazol und 4 ml einer 4 %-igen wässrigen Lösung von 4,4'-Azobis(4-cyanovaleriansäure, 10 h $t_{1/2}$ in Wasser: 69°C) zugegeben. Nach dem Einstellen der Lösung auf pH 6,5 mit einer 20%-igen bzw. 2-%igen Schwefelsäure-Lösung wurde mittels weiterer Zugabe von Wasser eine Monomerenkonzentration von 30 Gew.-% Monomere bezüglich der Summe aller Komponenten der Monomerlösung eingestellt und die Monomerlösung wurde auf -2°C abgekühlt.

Die abgekühlte Monomerlösung wurde in eine Thermoskanne umgefüllt, der Thermofühler für die Temperaturaufzeichnung angebracht und die Lösung wurde 30 Minuten mit Stickstoff gespült. Die Temperatur gegen Ende des Spülens betrug 0°C. Danach wurde 1 ml einer 4%-igen AIBN-Lösung in Methanol (10 h $t_{1/2}$ von AIBN in Toluol: 67°C), 0,1 ml einer 1 %-igen wässrigen Lösung von t-Butylhydroperoxid und 0,2 ml einer 1 %-igen wässrigen Natriumsulfit-Lösung zugegeben und untergemischt. Die Temperatur stieg nach dem Anspringen der Polymerisation innerhalb von 25 min von 0°C auf 80 bis 90°C. Es wurde ein festes Polymergel erhalten. Nach dem Erreichen des Temperaturmaximums wurde das Gel noch für 2 h bei 80°C in einem Trockenschrank gehalten.

Nach dem Ende der Polymerisation wurde der Gel-Block mit Hilfe eines Fleischwolfs zerkleinert und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde. Die Ergebnisse sind in Tabelle 1 zusammengefasst.

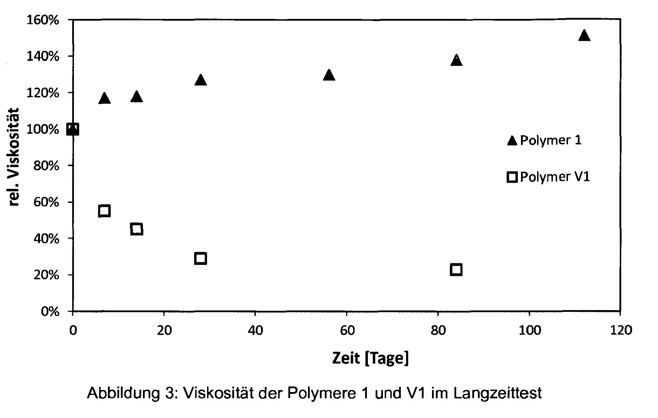

Von dem Polymer wurde außerdem ein Langzeit-Lagertest durchgeführt. Die Ergebnisse sind in Abbildung 3 dargestellt.

Beispiel 2:

Herstellung eines Copolymers aus 67 Gew. % Acrylamid und 33 Gew. % Natriumacrylat

| | |
|---|---|
| Sauerstoff-Radikalfänger: | Natrium-2-Mercaptobenzothiazol (0,5 Gew. % bzgl. Monomere) |
| Initiierung bei: | 0°C |
| pH | 6,5 |
| Monomerenkonzentration: | 30 Gew. % |

**Patentansprüche**

1. Verfahren zur Herstellung von wasserlöslichen Homo- oder Copolymeren umfassend (Meth)acrylamid durch radikalische Polymerisation einer wässrigen Lösung ethylenisch ungesättigter Monomere umfassend mindestens (Meth)acrylamid in Gegenwart mindestens eines Stabilisators zur Verhinderung von Polymerabbau durch molekularen Sauerstoff, **dadurch gekennzeichnet, dass** es sich um eine Gelpolymerisation handelt und das Verfahren mindestens die folgenden Schritte umfasst:

   (I) Bereitstellen einer wässrigen Monomerlösung umfassend mindestens

      • Wasser,
      • 25 bis 45 Gew. % -bezogen auf die Menge aller Komponenten der wässrigen Lösung- ethylenisch ungesättigter Monomere (A), wobei es sich bei mindestens 70 Gew. % der Monomere um monoethylenisch ungesättigte, hydrophile Monomere (A1) mit einer Löslichkeit in Wasser bei Raumtemperatur von mindestens 50 g/l handelt, mit der Maßgabe, dass es sich bei mindestens einem der Monomere (A1) um (Meth)acrylamid handelt,

• 0,1 bis 2 Gew. % -bezogen auf die Summe aller Monomere- mindestens eines Stabilisators (B) zur Verhinderung von Polymerabbau durch molekularen Sauerstoff, ausgewählt aus der Gruppe von schwefelhaltigen Verbindungen, sterisch gehinderten Aminen, N-Oxiden, Nitrosoverbindungen, aromatische Hydroxyverbindungen oder Ketonen,

• einen Azoinitiator (C) mit einer 10 h $t_{1/2}$ von 40°C bis 75°C,

wobei die wässrige Monomerlösung

• einen pH-Wert < 7 aufweist,

• auf eine Temperatur < 5°C gekühlt und

• inertisiert ist,

(II) Zugabe mindestens eines Redox-Initiators (D) für die radikalische Polymerisation zu der auf weniger als 5°C gekühlten Monomerlösung,

(III) Polymerisieren der wässrigen Monomerlösung unter im Wesentlichen adiabatischen Bedingungen, wobei dem Reaktor während der Polymerisation keine Wärme von außen zugeführt und der Reaktor während der Polymerisation nicht gekühlt wird, und wobei die Starttemperatur der Polymerisation weniger als 5°C beträgt und sich die Mischung unter dem Einfluss der gebildeten Polymerisationswärme auf eine Temperatur von 60°C bis 100°C erwärmt und ein Polymergel gebildet wird, sowie

(IV) Trocknen des erhaltenen Polymergels.

2. Verfahren gemäß Anspruch 1, **dadurch gekennzeichnet, dass** es sich bei dem Stabilisator (B) um mindestens eine Verbindung ausgewählt aus der Gruppe von Thioharnstoff, N,N'-Dimethylthioharnstoff, N,N'-Diethylthioharnstoff, N,N'-Diphenylthioharnstoff, Thiocyanaten, Tetramethylthiuramdisulfid, 2-Mercaptobenzothiazol bzw. Salze davon, 2-Mercaptobenzimidazol bzw. Salze davon, Natriumdimethyldithiocarbamat, 2,2'-Dithiobis(benzthiazol), 4,4'-Thiobis(6-t-butyl-m-Kresol), Dicyandiamid, Guanindin, Cyanamid, Paramethoxyphenol, 2,6-Di-t-butyl-4-methylphenol, Butylhydroxyanisol, 8-Hydroxychinolin, 2,5-Di(t-Amyl)hydrochinon, 5-Hydroxy-1,4-Naphtochinon, 2,5-Di(t-amyl)hydrochinon, Dimedon, Propyl-3,4,5-trihydroxybenzoat, Ammonium N-Nitrosophenylhydroxylamin, 4-Hydroxy-2,2,6,6-tetramethyoxylpiperidin, (N-(1,3-Dimethylbutyl)N'-phenyl-p-phenylendiamin oder 1,2,2,6,6-Pentamethyl-4-piperidinol handelt.

3. Verfahren gemäß Anspruch 1, **dadurch gekennzeichnet, dass** es dem Stabilisator (B) um 2-Mercaptobenzothiazol bzw. ein Salz davon handelt.

4. Verfahren gemäß einem der Ansprüche 1 bis 3, **dadurch gekennzeichnet**, die Polymerisation bei einer Temperatur von -4°C bis +4°C startet.

5. Verfahren gemäß einem der Ansprüche 1 bis 4, **dadurch gekennzeichnet, dass** sich der Reaktionsansatz unter dem Einfluss der Polymerisationswärme auf eine Temperatur von 80°C bis 100°C erwärmt.

6. Verfahren gemäß einem der Ansprüche 1 bis 5, **dadurch gekennzeichnet, dass** der pH-Wert auf 6 bis 6,5 eingestellt wird.

7. Verfahren gemäß einem der Ansprüche 1 bis 6, **dadurch gekennzeichnet, dass** die Konzentration der Monomere 30 bis 40 Gew. % beträgt.

8. Verfahren gemäß einem der Ansprüche 1 bis 7, **dadurch gekennzeichnet, dass** der Anteil von (Meth)acrylamid mindestens 30 Gew. % bezüglich der Summe aller Monomere beträgt.

9. Verfahren gemäß einem der Ansprüche 1 bis 7, **dadurch gekennzeichnet, dass** der Anteil von (Meth)acrylamid mindestens 50 Gew. % bezüglich der Summe aller Monomere beträgt.

10. Verfahren gemäß einem der Ansprüche 1 bis 9, **dadurch gekennzeichnet, dass** man die Polymerisation in einem konischen Reaktor durchführt.

11. Verfahren gemäß Anspruch 10, **dadurch gekennzeichnet, dass** es sich bei dem konischen Reaktor um einen Rohrreaktor (1) mit einem Durchmesser D1 handelt, der am unteren Ende eine konische Verjüngung (2) aufweist, wobei der Durchmesser am Ende der konischen Verjüngung D2 beträgt, das Verhältnis D1 / D2 2:1 bis 25:1 und der Winkel α zwischen der Wandung im zylindrischen Teil (1) und der Wandung im Bereich der konischen Verjüngung (2) mehr als 120° und weniger als 180° beträgt und der Reaktor weiterhin eine am unteren Ende der konischen Verjüngung angeordnete Absperrvorrichtung (3) sowie mindestens eine Zuführung (4) auf der Oberseite des Reaktors umfasst, wobei man

- mindestens Schritt (I) in geeigneten Misch- und Kühlvorrichtungen außerhalb des konischen Reaktors vornimmt,
- von dort aus die gekühlte Monomerlösung durch die Zuführung (4) in den Reaktor überführt, und
- nach der Polymerisation durch Öffnen der Absperrvorrichtung (3) und Einpressen mindestens eines Gases durch die Zuführung (4) das gebildete Polymergel (5) durch die geöffnete Absperrvorrichtung aus dem Reaktor presst.

12. Verfahren gemäß Anspruch 11, **dadurch gekennzeichnet, dass** man Schritt (II) vornimmt, indem man eine Lösung des Redox-Initiators (D) während des Zuführens der Monomerlösung durch die Zuführung (4) in jene injiziert.

**Claims**

1. A process for preparing water-soluble homo- or copolymers comprising (meth)acrylamide by free-radical polymerization of an aqueous solution of ethylenically unsaturated monomers comprising at least (meth)acrylamide in the presence of at least one stabilizer for prevention of polymer degradation by molecular oxygen, which is a gel polymerization and wherein the process comprises at least the following steps:

   (I) providing an aqueous monomer solution comprising at least

      - water,
      - 25 to 45% by weight - based on the amount of all the components of the aqueous solution - of ethylenically unsaturated monomers (A), where at least 70% by weight of the monomers are monoethylenically unsaturated, hydrophilic monomers (A1) having a solubility in water at room temperature of at least 50 g/l, with the proviso that at least one of the monomers (A1) is (meth)acrylamide,
      - 0.1 to 2% by weight - based on the sum total of all the monomers - of at least one stabilizer (B) for prevention of polymer degradation by molecular oxygen, selected from the group of sulfur compounds, sterically hindered amines, N-oxides, nitroso compounds, aromatic hydroxyl compounds and ketones,
      - an azo initiator (C) having a 10 h $t_{1/2}$ of 40°C to 75°C,

   where the aqueous monomer solution

      - has a pH of < 7,
      - has been cooled to a temperature of < 5°C and
      - has been inertized,

   (II) adding at least one redox initiator (D) for the free-radical polymerization to the monomer solution which has been cooled to less than 5°C,
   (III) polymerizing the aqueous monomer solution under essentially adiabatic conditions, no heat being supplied to the reactor from the outside during the polymerization and the reactor not being cooled during the polymerization, and the initiation temperature of the polymerization being less than 5°C and the mixture being heated under the influence of the heat of polymerization which develops to a temperature of 60°C to 100°C, forming a polymer gel, and
   (IV) drying the polymer gel obtained.

2. The process according to claim 1, wherein the stabilizer (B) is at least one compound selected from the group of thiourea, N,N'-dimethylthiourea, N,N'-diethylthiourea, N,N'-diphenylthiourea, thiocyanates, tetramethylthiuram disulfide, 2-mercaptobenzothiazole or salts thereof, 2-mercaptobenzimidazole or salts thereof, sodium dimethyldithiocarbamate, 2,2'-dithiobis(benzothiazole), 4,4'-thiobis(6-t-butyl-m-cresol), dicyandiamide, guanindine, cyanamide, paramethoxyphenol, 2,6-di-t-butyl-4-methylphenol, butylhydroxyanisole, 8-hydroxyquinoline, 2,5-di(t-amyl)hydroquinone, 5-hydroxy-1,4-naphthoquinone, 2,5-di(t-amyl)hydroquinone, dimedone, propyl 3,4,5-trihydroxybenzoate, ammonium N-nitrosophenylhydroxylamine, 4-hydroxy-2,2,6,6-tetramethyoxylpiperidine, (N-(1,3-dimethylbutyl)-N'-phenyl-p-phenylenediamine or 1,2,2,6,6-pentamethyl-4-piperidinol.

3. The process according to claim 1, wherein the stabilizer (B) is 2-mercaptobenzothiazole or a salt thereof.

4. The process according to any of claims 1 to 3, wherein the polymerization starts at a temperature of -4°C to +4°C.

5. The process according to any of claims 1 to 4, wherein the reaction mixture is heated to a temperature of 80°C to 100°C under the influence of the heat of polymerization.

6. The process according to any of claims 1 to 5, wherein the pH is adjusted to 6 to 6.5.

7. The process according to any of claims 1 to 6, wherein the concentration of the monomers is 30 to 40% by weight.

8. The process according to any of claims 1 to 7, wherein the proportion of (meth)acrylamide is at least 30% by weight based on the sum total of all the monomers.

9. The process according to any of claims 1 to 7, wherein the proportion of (meth)acrylamide is at least 50% by weight based on the sum total of all the monomers.

10. The process according to any of claims 1 to 9, wherein the polymerization is conducted in a conical reactor.

11. The process according to claim 10, wherein the conical reactor is a tubular reactor (1) which has a diameter D1 and narrows conically (2) at the lower end, where the diameter at the end of the conical narrowing is D2, the ratio D1 / D2 is 2:1 to 25:1 and the angle $\alpha$ between the wall in the cylindrical section (1) and the wall in the region of the conical narrowing (2) is more than 120° and less than 180°, and the reactor additionally has a shut-off device (3) arranged at the lower end of the conical narrowing and at least one feed (4) at the upper end of the reactor, and

   • at least step (I) is undertaken in suitable mixing and cooling devices outside the conical reactor,
   • the cooled monomer solution is transferred from there through the feed (4) into the reactor, and
   • after the polymerization, by opening the shutoff device (3) and injecting at least one gas through the feed (4), the polymer gel (5) formed is forced out of the reactor through the opened shut-off device.

12. The process according to claim 11, wherein step (II) is undertaken by injecting a solution of the redox initiator (D) into the feed (4) during the feeding of the monomer solution through the feed (4).

**Revendications**

1. Procédé pour la préparation d'homopolymères ou de copolymères solubles dans l'eau, comprenant du (méth)acrylamide, par polymérisation radicalaire d'une solution aqueuse de monomères éthyléniquement insaturés comprenant au moins du (méth)acrylamide en présence d'au moins un stabilisant pour empêcher la dégradation des polymères par de l'oxygène moléculaire, **caractérisé en ce qu'**il s'agit d'une polymérisation en gel et le procédé comprend au moins les étapes suivantes, consistant à :

   (I) mettre à disposition une solution aqueuse de monomères comprenant au moins

   - de l'eau,
   - 25 à 45 % en poids - par rapport à la quantité de tous les composants de la solution aqueuse - de monomères (A) éthyléniquement insaturés, au moins 70 % en poids de monomères étant des monomères (A1) éthyléniquement monoinsaturés, hydrophiles présentant une solubilité dans l'eau à température ambiante d'au moins 50 g/l, à condition qu'il s'agisse, pour au moins un des monomères (A1), de (méth)acrylamide,
   - 0,1 à 2 % en poids - par rapport à la somme de tous les monomères - d'au moins un stabilisant (B) pour empêcher la dégradation des polymères par de l'oxygène moléculaire, choisi dans le groupe formé par les composés soufrés, les amines stériquement encombrées, les N-oxydes, les composés nitroso, les composés hydroxy aromatiques ou les cétones,
   - un initiateur azo (C) présentant une 10 h $t_{1/2}$ de 40°C à 75°C,

   la solution aqueuse de monomères

- présentant un pH < 7,
- étant refroidie à une température < 5°C et
- étant inertisée,

(II) ajouter au moins un initiateur redox (D) pour la polymérisation radicalaire à la solution de monomères refroidie à moins de 5°C,

(III) polymériser la solution aqueuse de monomères dans des conditions essentiellement adiabatiques, aucune chaleur n'étant alimentée à partir de l'extérieur dans le réacteur et le réacteur n'étant pas refroidi pendant la polymérisation, et la température de départ de la polymérisation étant inférieure à 5°C et le mélange se réchauffant, sous l'influence de la chaleur de polymérisation formée, à une température de 60°C à 100°C et un gel polymère étant formé,

(IV) sécher le gel polymère obtenu.

**2.** Procédé selon la revendication 1, **caractérisé en ce qu'**il s'agit, pour le stabilisant (B), d'au moins un composé choisi dans le groupe formé par la thiourée, la N,N'-diméthylthio-urée, la N,N'-diéthylthiourée, la N,N'-diphénylthiourée, les thiocyanates, le disulfure de tétraméthylthiuram, le 2-mercaptobenzothiazole ou ses sels, le 2-mercaptobenzimidazole ou ses sels, le diméthyldithiocarbamate de sodium, le 2,2'-dithiobis(benzothiazole), le 4,4'-thiobis(6-t-butyl-m-crésol), le dicyanodiamide, la guanidine, le cyanamide, le paraméthoxyphénol, le 2,6-di-t-butyl-4-méthylphénol, le butylhydroxyanisole, la 8-hydroxyquinoléine, la 2,5-di(t-amyl)hydroquinone, la 5-hydroxy-1,4-naphtoquinone, la 2,5-di(t-amyl)hydroquinone, la dimédone, le 3,4,5-trihydroxybenzoate de propyle, la N-nitrosophénylhydroxylamine d'ammonium, la 4-hydroxy2,2,6,6-tétraméthyoxylpipéridine, la N-(1,3-diméthylbutyl)N'-phényl-p-phénylènediamine ou le 1,2,2,6,6-pentaméthyl-4-pipéridinol.

**3.** Procédé selon la revendication 1, **caractérisé en ce qu'**il s'agit, pour le stabilisant (B), de 2-mercaptobenzothiazole ou d'un sel de celui-ci.

**4.** Procédé selon l'une quelconque des revendications 1 à 3, **caractérisé en ce que** la polymérisation démarre à une température de -4°C à +4°C.

**5.** Procédé selon l'une quelconque des revendications 1 à 4, **caractérisé en ce que** la charge réactionnelle se réchauffe sous l'influence de la chaleur de polymérisation à une température de 80°C à 100°C.

**6.** Procédé selon l'une quelconque des revendications 1 à 5, **caractérisé en ce que** le pH est réglé à 6 jusqu'à 6,5.

**7.** Procédé selon l'une quelconque des revendications 1 à 6, **caractérisé en ce que** la concentration en monomères est de 30 à 40% en poids.

**8.** Procédé selon l'une quelconque des revendications 1 à 7, **caractérisé en ce que** la proportion de (méth)acrylamide est d'au moins 30% en poids par rapport à la somme de tous les monomères.

**9.** Procédé selon l'une quelconque des revendications 1 à 7, **caractérisé en ce que** la proportion de (méth)acrylamide est d'au moins 50% en poids par rapport à la somme de tous les monomères.

**10.** Procédé selon l'une quelconque des revendications 1 à 9, **caractérisé en ce qu'**on réalise la polymérisation dans un réacteur conique.

**11.** Procédé selon la revendication 10, **caractérisé en ce qu'**il s'agit, pour le réacteur conique, d'un réacteur tubulaire (1) présentant un diamètre DI, qui présente un rétrécissement conique (2) en l'extrémité inférieure, le diamètre en l'extrémité du rétrécissement conique valant D2, le rapport D1 / D2 valant 2:1 à 25:1 et l'angle $\alpha$ entre la paroi dans la partie cylindrique (1) et la paroi au niveau du rétrécissement conique (2) étant supérieur à 120° et inférieur à 180° et le réacteur comprenant en outre un dispositif de blocage (3) disposé en l'extrémité inférieure du rétrécissement conique ainsi qu'au moins une alimentation (4) au niveau de la face supérieure du réacteur,

- au moins l'étape (I) étant réalisée dans des dispositifs de mélange et de refroidissement appropriés à l'extérieur du réacteur conique,
- la solution refroidie de monomères étant transférée de ceux-ci via l'alimentation (4) dans le réacteur et
- après la polymérisation par ouverture du dispositif de blocage (3) et injection d'au moins un gaz au travers de l'alimentation (4), le gel polymère (5) formé étant pressé au travers du dispositif de blocage ouvert, hors du réacteur.

12. Procédé selon la revendication 11, **caractérisé en ce qu'**on réalise l'étape (II) en injectant une solution de l'initiateur redox (D) pendant l'alimentation de la solution de monomères au travers de l'alimentation (4) dans celle-ci.

Abbildung 1: Teilweise konischer Reaktor

Abbildung 2: Vollständig konischer Reaktor

Abbildung 3: Viskosität der Polymere 1 und V1 im Langzeittest

**IN DER BESCHREIBUNG AUFGEFÜHRTE DOKUMENTE**

**In der Beschreibung aufgeführte Patentdokumente**

- WO 2010133258 A1
- JP 74027659 B
- WO 2012069478 A1
- WO 2012136613 A1
- DE 19748153 A1
- US 5296577 A
- DE 3021767 A1

- WO 2010133527 A
- WO 2012069478 A
- US 7700702 B2
- WO 03066190 A1
- GB 1054028 A
- US 5633329 A
- US 7619046 B2